# EUROPÄISCHE PATENTSCHRIFT

(11) **EP 4 002 145 B1**
(45) Veröffentlichungstag und Bekanntmachung des Hinweises auf die Patenterteilung: **19.06.2024**
(21) Anmeldenummer: 20206967.0
(22) Anmeldetag: 11.11.2020
(51) Int. Cl.: G06F 16/21, G06F 16/22, G06F 16/25

(54) **LISTENBASIERTE DATENSPEICHERUNG ZUR DATENSUCHE**
LIST-BASED DATA STORAGE FOR DATA SEARCH
ENREGISTREMENT DE DONNÉES BASÉ SUR DES LISTES DESTINÉ À LA RECHERCHE DE DONNÉES

(43) Veröffentlichungstag der Anmeldung: 25.05.2022
(73) Patentinhaber: Cortex Innovations GmbH, 30916 Isernhagen (DE)
(72) Erfinder: Palm, Peter, 30916 Isernhagen (DE)
(74) Vertreter: Richardt Patentanwälte PartG mbB

(56) Entgegenhaltungen:
- EP-A1- 2 365 448
- US-A1- 2004 015 783
- US-B1- 6 542 896

## Beschreibung

### Gebiet

Die Erfindung betrifft ein Verfahren und System zur Verarbeitung und Speicherung von Daten zur Suche in den Daten.

### Stand der Technik

Im Stand der Technik sind verschiedene Datenbankmanagementsysteme (DBMS) zur Speicherung, Verwaltung und effizienten Verarbeitung von Daten bekannt. Die wesentliche Aufgabe von DBMSs ist es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Grundlage für die Strukturierung der Daten und ihrer Beziehungen zueinander in einer von einem herkömmlichen DBMS verwalteten Datenbank ist das Datenbankmodell, das durch den DBMS-Hersteller festgelegt wird. Je nach Datenbankmodell muss das Datenbankschema an bestimmte Strukturierungsmöglichkeiten angepasst werden. Zu den bekannten heute verwendeten Datenbankmodellen gehören hierarchische Modelle, netzwerkartige Modelle, relationale (in Tabellen organisierte) Modelle, objektorientierte Modelle, dokumentorientierte Modelle sowie Mischformen dieser Modelle. Außerdem wird klassischerweise unterschieden zwischen DBMSs, die optimiert sind für die effiziente Beantwortung vieler kleine Abfragen (OLTP) oder lang andauernder Auswertungen (OLAP).

Bei herkömmlichen DBMSs ist es bereits zum Zeitpunkt der Wahl des DBMS und auch bei der Definition der internen Strukturen der von dem DBMS verwalteten Datenbank (insb. Größe, Anzahl und interne Referenzen von Datenbanktabellen, Auswahl der Art der Spalten für die ein Index erstellt wird, etc.) notwendig, dass sich der Datenbankentwickler sowohl mit dem Inhalt (dem Informationsgehalt) der zu verwaltenden Daten auseinandersetzt wie auch mit der Art der Anfragen, die das DBMS voraussichtlich wird bearbeiten müssen.

Problematisch ist, dass sich beide Aspekte im Laufe der Zeit ändern können und oftmals zum Zeitpunkt der Errichtung der Datenbank nicht oder nicht vollständig bekannt sind. So tritt in der Praxis häufig der Fall ein, dass sich im Laufe der Zeit andere oder zusätzliche Aspekte der in der Datenbank gespeicherten Daten als relevant herausstellen und neue Abfragen formuliert werden müssen, die man zum Zeitpunkt der initialen Datenbankerrichtung nicht berücksichtigen konnte. Falls beispielsweise die Datenbank medizinische Daten enthält und nach Errichtung der Datenbank neue medizinische Erkenntnisse darüber gewonnen werden, dass eine Kombination mehrerer Symptome für eine bestimmte Diagnose prädiktiv ist, so kann es passieren, dass die Daten der Datenbank die Symptome zwar enthält, die Symptome aber derart auf verschiedene Tabellen verteilt und/oder derart mit Indices versehen sind, dass die Abfrage ineffizient wird, also sehr viel Arbeitsspeicher, CPU-Kapazität und Zeit konsumiert. Eine nachträgliche strukturelle Anpassung einer einmal definierten Datenbank ist jedoch wegen der zahlreichen Abhängigkeiten innerhalb der Daten in der Datenbank wie auch im Hinblick auf Client-Systeme ausgesprochen aufwändig, fehleranfällig und oftmals auch gar nicht mehr möglich.

Außerdem tritt oftmals das Problem auf, dass im Laufe der Zeit weitere Datenquellen in die Datenbank integriert werden müssen, deren interne Struktur jedoch nicht zu dem bei Errichtung der Datenbank gewählten Datenmodell passt. Falls beispielsweise eine Datenbank mit relationalem Datenmodell gewählt wurde und es sollen nun weitere Daten integriert werden, die hierarchisch gegliedert sind, ist es oftmals nicht möglich, die weiteren Daten so in der Datenbank zu speichern, obwohl die weiteren Daten konzeptionell mit den bereits in der Datenbank befindlichen Daten verbunden sein mögen. Und sogar wenn es gelingt, die weiteren Daten in einem an sich ungeeigneten Datenmodell zu speichern, ist eine gemeinsame Abfrage und semantische Integration der bestehenden und der weiteren Daten nicht möglich, zumindest nicht ohne ein grundlegendes Neu-Design der Datenorganisation in der Datenbank.

Somit sind bestehende DBMS oftmals durch strukturelle Inflexibilität, schlechte Erweiterbarkeit und/oder schlechte Performance insbesondere bei der Verarbeitung von komplexen Anfragen bezüglich einer großen Menge an Datenobjekten mit sehr vielen verschiedenen Attributen (keys) und entsprechenden Werten gekennzeichnet. Falls nachträglich weitere und anders strukturierte Daten in der Datenbank gespeichert werden müssen, ist oftmals eine inhaltlich sinnvolle, performante und ressourcenschonende gemeinsame Abfrage und Analyse von bestehenden und neu hinzugefügten Daten nicht möglich. Dies stellt insbesondere, aber nicht nur, im Kontext des "Internets der Dinge" ein Problem dar, da hier durch verschiedene Objekte und Sensoren inhaltlich wie strukturell sehr heterogene Daten erfasst werden, deren Zusammensetzung und Beschaffenheit sich über die Zeit oftmals ändert.

Das US-Patent US 6 542 896 B1 beschreibt ein System und ein Verfahren zum Organisieren von Daten und zum anschließenden Auffinden dieser Daten in einer Datenbank. Das System liest Rohdatensätze aus einer oder mehreren Quellen von Rohdaten. Der Inhalt der Rohdaten wird in eine kodierte Zwischenform vorcodiert. Die kodierten Daten werden anschließend in ein geeignetes Zahlensystem umgewandelt und in einem Format gespeichert, das die Verwendung effizienter mathematischer Operationen erleichtert.

### Zusammenfassung

Der Erfindung liegt die Aufgabe zugrunde, ein verbessertes Verfahren und System zur Speicherung von Daten in einer Weise, dass diese effizient durchsuchbar sind, vorzuschlagen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zur Speicherung von Daten in einem Datenspeicher. Das Verfahren umfasst:
- Empfang von Rohdaten oder von Zugriffsadressen der Rohdaten durch ein Datenverarbeitungs- und Suchsystem - DVS-System, wobei die Rohdaten unterschiedliche Strukturen haben;
- Parsen der Rohdaten durch mehrere verschiedene Parser zur Ermittlung von Datenobjekten mit je ein oder mehreren Datenwerten und einer Objekt-ID jedes der Datenobjekte, wobei zumindest einigen der Datenwerte jeweils ein semantisches Konzept zugewiesen wird;
- automatischer Import der Parsingergebnisse durch das DVS-System;
- automatische Speicherung aller Parsingergebnisse in Form von redundanzfreien Datenwert-Listen in dem Datenspeicher durch das DVS-System, wobei die redundanzfreien Listen umfassen:
   - ein oder mehrere Konzeptlisten, wobei jede der Konzeptlisten jeweils ein semantisches Konzept repräsentiert und eine nicht-redundante Liste selektiv diejenigen der importierten Datenwerte beinhaltet, denen beim Parsen das semantische Konzept dieser Konzeptliste zugewiesen wurde, wobei jedem der Datenwerte in der Konzeptliste alle Objekt-IDs derjenigen Datenobjekte zugewiesen sind, die diesen Datenwert beinhalten, wobei der beinhaltete Datenwert eine Repräsentation des semantischen Konzepts dieser Konzeptliste ist;
   - eine konzeptfreie Liste, wobei die konzeptfreie Liste selektiv diejenigen der importierten Datenwerte beinhaltet, denen beim Parsen kein semantisches Konzept zugewiesen wurde, wobei jedem der Datenwerte in der konzeptfreien Listen alle Objekt-IDs derjenigen Datenobjekte zugewiesen sind, die diesen Datenwert beinhalten, wobei dem beinhalteten Datenwert dieses Datenobjekts beim Parsen kein semantisches Konzept zugewiesen werden konnte; und
- Bereitstellung der redundanzfreien Listen durch das DVS-System, um eine Suchanfrage zu beantworten und/oder eine Datenanalyse durchzuführen.

Dies kann vorteilhaft sein, da strukturell wie inhaltlich höchst heterogene Rohdaten in eine gemeinsame Struktur überführt werden, die eine schnelle und effiziente Verarbeitung auch großer Datenmengen erlaubt (Schnitt-, Vereinigungs-, Differenz- oder Symmetrische Differenz-Mengen von Objekt-IDs von Elementen mehrerer Listen), und die jederzeit sowohl inhaltlich (durch Ergänzung weiterer vorzugsweise automatisch erzeugter Konzeptlisten) als auch bezüglich der unterstützten Abfragen und Analyseprozesse erweiterbar ist, ohne dass hierfür eine grundsätzliche Änderung der Struktur der Daten innerhalb des Datenspeichers geändert werden müsste. Da die Listen redundanzfrei sind, ist jeder Datenwert nur einmal in einer Liste enthalten. Falls er in mehreren Datenobjekte der Rohdaten vorkommt, ist dieser einmal in der Liste vorkommende Datenwert mit diesen mehreren Objekt-IDs verknüpft gespeichert. Somit können auch sehr große Datenbestände schnell und effizient auch von Computersystemen mit wenig Arbeitsspeicher und/oder geringen CPU-Kapazitäten schnell verarbeitet werden. Insbesondere wenn die Rohdaten bestimmte Datenwerte mehrfach enthalten (z.B. bei Texten, die eine spezifische Kombination einer endlichen Menge an existierenden Wörtern darstellen, oder bei Proteinen, die eine spezifische Sequenz einer endlichen Menge an Aminosäuren darstellen), kann diese Form der Datenrepräsentation zu einem enormen Datenkompressionseffekt führen. Beispielsweise können die Objekt-IDs jeweils einen Datensatz (z.B. Proteinsequenz-ID, Rohdatendatei-URL, natürlichsprachlicher Text oder Satz, Zeile in einer Excel-Datei etc.) repräsentieren und der Datenwert ist ein in diesem Datensatz vorkommender Wert (z.B. Wort, Bitfolge, numerischer Wert, etc.).

Die Zuweisung von semantischen Konzepten zu den Datenwerten ist typischerweise Bestandteil des Parsingprozesses.

Gemäß Ausführungsformen der Erfindung speichert das DVS-System somit die importierten Datenwerte in Abhängigkeit von dem semantischen Konzept, das diesen zugewiesen ist (sofern dieses beim Parsens ermittelt werden konnte oder anderweitig vorgegeben war) in redundanzfreie Datenwertlisten, wobei die Speicherung und Verteilung der Datenwerte in die Listen unabhängig von der ursprünglichen Zugehörigkeit des Datenwertes zu den Datenobjekten erfolgt.

Somit haben Ausführungsformen der Erfindung den Vorteil einer enormen Flexibilität, was die Integration großer Mengen strukturell und inhaltlich heterogener Daten angeht, und dies bei sehr hoher Performance von Datenanalysen und Suchprozessen, da die ursprüngliche Zuweisung von Datenwerten zu Datenobjekten in struktureller Hinsicht beim Import in den Datenspeicher aufgelöst wird: die Zuordnung der Datenwerte zu den Objekten findet sich ausschließlich in den Objekt-IDs wieder, hat aber ansonsten keine Auswirkung auf die Struktur der vom DVS-System verwalteten Daten: unabhängig davon ob die Rohdaten hierarchisch, tabellarisch oder als XML Datei bereitgestellt werden, unabhängig davon ob die Datenwerte schon weitgehend in den Rohdaten vorgegeben wurden (z.B. durch key-value Felder) oder dynamisch von einem der Parser in einem Analyseprozess (z.B. Mustererkennung auf Bild- oder Audiodaten) gewonnen wurden: die Datenwerte werden immer innerhalb redundanzfreier Listen verknüpft mit den die Datenwerte enthaltenden Objekt-IDs gespeichert. Bei dieser Speicherung wird das semantische Konzept, das ein Datenwert repräsentiert, berücksichtigt, indem der Datenwert selektiv in diejenige Konzeptliste gespeichert wird, die eben dieses Konzept repräsentiert. Falls der Datenwert in dieser Liste schon vorhanden ist, wird nur die Menge der Objekt-IDs entsprechend ergänzt. Falls zum Zeitpunkt des Parsens der Rohdaten das semantische Konzept hinter einem Datenwert nicht ermittelt werden konnte, wird dieser Datenwert in die "konzeptfreie" Liste gespeichert bzw. wenn der Datenwert dort schon vorhanden ist, wird nur der entsprechende Eintrag um eine Objekt-ID erweitert.

Der Importprozess kann somit als ein Prozess der Auflösung aller Datenobjekt-Strukturen verstanden werden, bei welchem die Gesamtheit aller aus allen Datenobjekten der Rohdaten extrahierten Datenwerte auf Basis von den diesen zugewiesenen semantischen Konzepten in redundanzfreien Datenwertlisten gespeichert wird.

Beispielsweise können so verschiedene Datenquellen wie JSON Dateien, XML-Dateien, Datenbanktabellen, Mediendateien oder Nutzereingaben über eine Nutzerschnittstelle, z.B. eine graphische Nutzerschnittstelle, an das DVS-System bereitgestellt werden. Die Bereitstellung kann z.B. so erfolgen, dass das DVS-System die Rohdaten (im Original oder in Kopie) empfängt, z.B. über ein Netzwerk oder von einem lokalen Datenspeicher, oder einer sonstigen Quelle, und zunächst in Kopie in einem eigenen Dokumenten-Store speichert. Dies kann den Vorteil haben, dass das Original noch verfügbar ist und ggf. zum Zwecke der Darstellung des Such- oder Analyseergebnisses oder für später erst ergänzte Parsingprozesse und Analysen verwendet werden kann. Es ist aber auch möglich, dass die Rohdaten nicht in Kopie in einem Dokument-Store des DVS-Systems gespeichert werden, sondern das DVS-System lediglich (permanent oder temporär) Lesezugriff auf die Rohdaten erhält, um diese verarbeiten und parsen zu können. In diesem Fall ist es ausreichend, wenn das DVS-System die Zugriffsadressen der Rohdaten erhält.

Ausführungsformen der Erfindung können den Vorteil haben, dass Datenobjekte, die durch sehr viele Eigenschaften (Values) bezüglich verschiedenster semantischer Konzepte (Keys) beschrieben sind (auch Tausende pro Objekt), mit sehr kurzen Abfragezeit nach einer beliebigen Kombination verschiedenster keyvalues abgefragt werden können, ohne dabei einer Vorgabe folgen zu müssen, die von der ursprünglichen Struktur der Datenobjekte abhängt (wie das z.B. bei Suchanfragen in relationalen, indexbasierten DBMS im Hinblick auf die Tabellen- und Indexstrukturen in der Datenbank der Fall ist). In Indexbasierten Systemen müssten dazu Indices aller möglichen Kombinationen aller Keys vorliegen. Die Menge der Indices in herkömmlichen indexbasierten DBMS wächst also mit der Fakultät der Keys!. Gerade bei einer Vielzahl verschiedener Objekttypen mit einer Vielzahl unterschiedlicher semantischer Konzepte wächst die Anzahl der benötigten Indices, um jegliche denkbare Kombination von Key-bezogenen Suchkriterien mit der Fakultät der Keys! Gemäß Ausführungsformen der Erfindung ist dagegen eine Erzeugung und Verwendung eines Index (im Sinne eines zusätzlich zu den Datenwerten erzeugten, durchsuchbaren Datenstruktur, z.B. B-Baum), nicht erforderlich. Gemäß Ausführungsformen korrespondiert zu jedem semantischen Konzept eine nicht-redundante Konzeptliste, in welcher jeder Datenwert dieses Konzepts - im Unterschied z.B. zu den datensatzbasierten Tabellen eines relationalen DBMS - nur einmal vorkommt. Somit kann gemäß Ausführungsformen der Erfindung eine Suche und/oder Analyse durchgeführt werden, ohne dass hierfür für die zu erwartenden Suchanfragen passende Indexstrukturen erzeugt werden müssten. Vielmehr kann die Suche direkt in den redundanzfreien Listen durchgeführt werden, wobei vorzugsweise nur diejenigen Konzeptlisten (und ggf. auch die konzeptfreie Liste und/oder eine globale Liste herangezogen werden), die zu den semantischen Konzepten korrespondieren, auf welche sich die Suchkriterien beziehen.

Gemäß Ausführungsformen der Erfindung ist der Datenspeicher ein flüchtiger oder nicht-flüchtiger Datenspeicher. Der Datenspeicher kann z.B. eine Festplatte (HDD) oder ein Massenspeicher - Solid State Drive (SSD) oder ein Arbeitsspeicher (In Memory Speicherung und Verwaltung von Listen) sein.

Gemäß Ausführungsformen der Erfindung liegen zumindest einige der Rohdaten in Form einer Vielzahl von Datenstrukturen vor oder werden in Form einer Vielzahl von Datenstrukturen empfangen. Die Vielzahl von Datenstrukturen kann insbesondere eine Mischung von zwei oder mehreren der folgenden Datenstrukturen umfassen:
- XML-Datei;
- JSON Datei;
- Textdatei;
- CSV-Datei;
- Datenbanktabelle;
- Objektbaum;
- Mediendatei, insbesondere Video-, Audio- und/oder Bilddatei;
- Über eine GUI eingegebene Daten;
- Streaming Daten.

Streaming Daten sind Daten, die ununterbrochen von Quellsystemen generiert und in Paketen und/oder oder innerhalb von Warteschlangen (nach dem FiFo Prinzip) verschickt werden. Typischerweise werden diese Daten von einem Streaming Framework in "Echtzeit" verarbeitet. Ein Streaming Framework nimmt diesen Stream an Daten entgegen und verarbeitet die Informationen im Arbeitsspeicher, bevor diese dann auf einen Datenspeicher (z.B. Festplatte (HDD) oder Massenspeicher - Solid State Drive (SSD)) geschrieben werden. Auch das DVS-System kann gemäß Ausführungsformen zu einer Echtzeitverarbeitung von Streaming-Rohdaten ausgebildet sein. Streaming Daten können z.B. Log-Daten eines ERP-Systems, E-Commerce Events (Views, Orders, Baskets), Tracking-Events auf Mobile Apps, Geolocations aus Webanwendungen, oder Nutzungsdaten von bestimmten Produkten sein.

Diese Liste ist jedoch nicht abschließend zu verstehen.

Gemäß Ausführungsformen enthalten zumindest einige (in der Regel die meisten) der nicht-redundanten Listen Datenwerte, die in zwei oder mehr der unterschiedlichen Datenstrukturen mit den Rohdaten enthalten waren. Somit hat die Frage, in welchen Datenstrukturen ein Datenwert in den Rohdaten auftritt, keinen Einfluss auf die Struktur der vom DVS-System verwalteten Listen. Dies kann vorteilhaft sein, da das System somit unabhängig wird von der Struktur der Dateien und Datenbanken, die die Rohdaten enthalten.

Bei den Rohdaten kann es sich um Daten verschiedensten Inhalts und verschiedenster Struktur handeln. Dies kann vorteilhaft sein, da die Verwendung des DVS-Systems die Integration einer großen Menge heterogener Daten von vielen unabhängigen Quellen in eine gemeinsame Datenstruktur (nicht redundante Datenwertlisten) ermöglicht. Hierdurch ist es nicht nur möglich, die Datenmenge enorm zu komprimieren, sondern auch, sie semantisch zu integrieren, zumindest dann, wenn die Rohdaten von zwei oder mehr verschiedenen Quellen zumindest einen Typ von Datenwert haben, der das gleiche semantische Konzept repräsentiert und dies beim Parsingprozess auch erkannt wird. In diesem Fall werden nämlich die Datenwerte dieses Konzepts verknüpft mit Referenzen auf die jeweiligen Datenobjekte in der gleichen Konzeptliste gespeichert.

Besonders vorteilhaft ist auch, dass es nicht nötig ist, die Datenobjekte der verschiedenen Quellen vollständig semantisch zu integrieren. Falls z.B. die Rohdaten Proteinsequenzen oder Gensequenzen sind und im Zuge eines Parsingprozesses dieser Daten bestimmte Peptidsequenzen oder genomischen Marker erkannt werden, die das Konzept "Prädiktoren für Diagnose X" repräsentieren, auch in den Rohdaten anderer Datenquellen vorkommen, so ist es unschädlich, wenn die verwendeten Parser nicht alle semantischen Konzepte, die in den Rohdaten einer Datenquelle vorhanden sein mögen, erkennen und extrahieren kann. Es ist also kein vollständiges "Verständnis" bzw. kein vollständiges "Datenmodell" notwendig, um Daten verschiedener heterogener Quellen zu integrieren. Falls beim Parsen der Rohdaten unterschiedlicher Datenquellen aber zumindest ein oder einige Datenwerte bestimmter semantischer Konzepte gefunden werden, so können diese in die entsprechende Liste eingeordnet und dadurch integriert werden.

Sogar falls das semantische Konzept unbekannt ist, ist eine Integration der heterogenen Daten auf Korrelations-Basis möglich: falls beispielsweise bestimmte genomische Marker in der Literatur häufig zusammen mit einer bestimmten Diagnose erwähnt werden, so führt das dazu, dass die Schnittmengen der Objekt-IDs der Datenobjekte, die den genomischen Marker einerseits und die Diagnose andererseits enthalten, sehr groß ist (größer als dies statistisch bei gegebener Auftretenshäufigkeit der einzelnen Datenwerte zu erwarten wäre). Wenn die biologische Funktion und damit einhergehend das semantische Konzept hinter diesem Marker nicht bekannt ist, wird der Marker als Datenwert in der konzeptfreien Liste gespeichert und kann somit bei der Bearbeitung von Suchanfragen oder Datenanalysen, z.B. Korrelationsanalysen, mitberücksichtigt werden, völlig unabhängig davon, ob der genomische Marker in einer XML Datei, einer Textdatei oder einem sonstigen Format bereitgestellt wurde.

Ausführungsformen der Erfindung haben somit auch den Vorteil, sehr flexibel erweiterbar zu sein: Da weder die Struktur der Datenobjekte in den Rohdaten noch die Art und Anzahl der Attribute der Datenobjekte einen Einfluss auf die Struktur der von dem DVS-System verwaltete Daten haben (diese werden in jedem Fall in Form nicht-redundanter Listen gespeichert), können jederzeit weitere Rohdaten in neuen Strukturen importiert und integriert werden. Falls die Struktur der Rohdaten bisher nicht bekannt war, ist es lediglich erforderlich, einen entsprechenden Parser zu entwickeln, der die Rohdaten verarbeitet, falls möglich die darin enthaltenen Datenwerte semantischen Konzepten zuweist und in Abhängigkeit vom Vorhandensein und der Art des zugewiesenen semantischen Konzepts den Datenwert samt Objekt-ID des betreffenden Datenobjekts, oder zumindest die Objekt-ID, in der konzeptfreien Liste oder einer der Konzeptlisten zu speichern.

Nach Ausführungsformen umfasst das Verfahren die Durchführung der Suchanfrage und/oder der Analyse durch das DVS-System oder ein anderes DVS-System.

Nach Ausführungsformen wird die Suchanfrage und/oder die Datenanalyse insbesondere ohne Zugriff auf die Rohdaten durchgeführt.

Nach Ausführungsformen ist das DVS-System dazu konfiguriert, die Analyse und/oder Suche ausschließlich auf Basis der redundanzfreien Listen oder auf von diesen Listen durch das DVS-System abgeleiteten Daten durchzuführen, wobei die Analyse und/oder Suche insbesondere nicht auf den Rohdaten oder den in diesen enthaltenen Datenobjekten oder diese Datenobjekte repräsentierenden Datensätzen ausgeführt wird.

Dies hat den Vorteil, dass die Suche und Analyse nicht von der Struktur der Rohdaten abhängt und auch Rohdatenmengen im Terabyte Bereich auf eine Größe komprimiert und verarbeitet werden können, dass sie von Standardcomputern und teils sogar Einplatinenrechnern wie z.B. Raspberry Pi schnell verarbeitet und mit komplexen Suchanfragen durchsucht werden können. Die Kompression beruht darauf, dass jeder Datenwert in jeder Konzeptliste und der konzeptfreien Liste nur einmal vorkommt. Es ist zwar möglich, dass ein Datenwert wie z.B. "Silber" in zwei oder mehr Konzeptlisten vorkommt, wenn diesem mehrere unterschiedliche semantische Konzepte (Nachname, Farbe, Metalltyp) zugewiesen sind. Aber in jeder Liste kommt der Wert "Silber" nur einmal vor. Wird der Datenwert "Silber" in weiteren Datenobjekten gefunden, in welcher der Datenwert "Silber" das Konzept "Metall" repräsentiert, dann wird dem Listenelement "Silber" selektiv in derjenigen Liste, die das Konzept "Metalltypen" repräsentiert, die Objekt-IDs dieser Datenobjekte zusätzlich zugewiesen. Falls der Parser beim Parsen bestimmter Rohdaten nicht in der Lage ist, zu erkennen, ob der Datenwert "Silber" eine Farbe, ein Metall, einen Nachnahmen oder gar ein weiteres bisher nicht als Liste repräsentiertes semantisches Konzept repräsentiert, wird dieser Datenwert "Silber" in der konzeptfreien Liste gespeichert. Es ist also möglich, dass der Datenwert "Silber" mehrere 1000-mal in den Rohdaten vorkommt, aber in den Listen, auf welchen das DVS-System arbeitet, nur noch einmal oder einige wenige Male vorkommt. Die Objekt-IDs sind vorzugsweise in Form von Zahlenwerten gespeichert, die wenig Speicherplatz konsumieren und auf welchen schnelle Mengenoperationen durchgeführt werden können. Somit können komplexe Suchanfragen z.B. nach allen Datenobjekten, die den Produkttyp "Leitungsmaterial" und "Silber" als "Metalltyp" enthalten, dadurch beantwortet werden, dass eine Schnittmenge der Objekt-IDs berechnet wird aus der Menge der Objekt-IDs, die in der Konzeptliste "Produkttyp" dem Datenwert "Leitungsmaterial" und in der Konzeptliste "Metalltyp" dem Datenwert "Silber" zugewiesen sind. Die Datenanalyse benötigt also die Struktur der in den Rohdaten enthaltenen Datenobjekte nicht mehr.

Nach Ausführungsformen ist der von dem DVS-System verwaltete Datenspeicher frei von den Datenobjekten (die auch als Datensätze beschrieben werden können).

Nach anderen Ausführungsformen verwaltet das DVS-System zusätzlich einen Dokumentenspeicher, in welchem alle oder zumindest einige der Datenstrukturen, die die Rohdaten enthalten, gespeichert sind. Doch auch hier werden diese Rohdaten nicht zum Zwecke der Bearbeitung von Suchanfragen oder zur Datenanalyse verwendet, sondern für andere Zwecke. Beispielsweise kann es vorteilhaft sein, eine Kopie der Rohdaten in dem Dokumentenspeicher des DVS-System zu speichern, um zu einem späteren Zeitpunkt, wenn zusätzliche und/oder bessere Parser verfügbar sind, den Parsingprozess erneut auf den Rohdaten durchzuführen um weitere Datenwerte und/oder diesen zugewiesene semantische Konzepte zu erkennen und zu extrahieren, die von den bisher verwendeten Parsern nicht erkannt bzw. geparst werden konnten. Dies kann den Netzwerkverkehr reduzieren, da die Rohdaten, die in über ein Netzwerk verbundenen Systemen gespeichert sind, nicht erneut übertragen werden müssen, wenn ein neuer oder besserer Parser vorliegt.

Nach Ausführungsformen der Erfindung umfassen die redundanzfreien Listen ferner eine globale Liste. Die globale Liste ist eine redundanzfreie Liste aller importierter Datenwerte, wobei jedem Datenwert in der globalen Liste ein oder mehrere Zeiger zugewiesen sind, wobei jeder der Zeiger auf ein Element einer der Konzeptlisten oder ein Element der konzeptfreien Liste verweist, welches einen zu diesem Datenwert identischen Datenwert beinhaltet. Das DVS-System ist dazu konfiguriert, die Analyse oder die angefragte Suche zumindest auch auf der globalen Liste durchzuführen, wobei die globale Liste zur Erkennung und/oder zur konzeptspezifischen Verarbeitung von Datenwerten dient, die in verschiedenen Datenobjekten unterschiedliche semantische Konzepte repräsentieren.

Den Datenwerten in der globalen Liste sind vorzugsweise keine Objekt-IDs zugewiesen. Beispielsweise würde die globale Liste den Datenwert "Silber" nur einmal enthalten. Diesem Datenwert in der globalen Liste sind zwar keine Objekt-IDs direkt zugewiesen, aber es sind ihm Zeiger auf ein oder mehrere Konzeptlisten zugewiesen, die semantische Konzepte repräsentieren, denen der Datenwert "Silber" in mindestens einem der Datenobjekte zugewiesen ist. In diesem Beispiel wäre dem Datenwert "Silber" in der globalen Liste also die Konzeptlisten "Nachname", "Metalltyp" und "Farbe" zugewiesen. Falls der Datenwert Silber auch in der konzeptfreien Liste gespeichert ist, wäre dem "Silber" Datenwert auch die konzeptfreie Liste zugewiesen.

Die Verwendung der globalen Liste kann also den Vorteil haben, dass für jeden Datenwert unmittelbar festgestellt werden kann, ob er - je nach Kontext - unterschiedliche semantische Konzepte repräsentiert und falls ja, wie viele und welche. Da vorzugsweise nur den Datenwerten der einzelnen Konzeptlisten bzw. der konzeptfreien Liste die Objekt-IDs direkt zugewiesen sind, können die Datenobjekte, die den Datenwert "Silber" gemäß eines bestimmten Konzepts beinhalten, leicht selektiert und von den Datenobjekten unterschieden werden, die das Wort "Silber" gemäß eines anderen Konzepts beinhalten.

Gemäß einer Ausführungsform ist das DVS-System dazu ausgebildet, eine GUI zur Eingabe eines Suchbegriffs bereitzustellen. Während der Eingabe eines Suchbegriffs durchsucht das DVS-System die globale Liste, um festzustellen, ob der eingegebene Begriff einem Datenwert der globalen Liste entspricht. Das DVS-System schlägt dem Nutzer ein oder mehrere ermittelte Datenwerte vor, die zumindest teilweise identisch oder ähnlich sind zu dem bereits eingegebenen Suchbegriff. Beispielsweise kann das DVS-System die ermittelten Datenwerte in einem Kontextmenü oder einer Auto-Vervollständigen-Liste dem Nutzer anzeigen und zur Auswahl bereitstellen. Wenn der Nutzer einen der vorgeschlagenen Datenwerte auswählt, ermittelt das DVS-System die Anzahl und Art der semantischen Konzepte (und entsprechenden Konzeptlisten), auf welche dieser Datenwert der globalen Liste referenziert. Die so ermittelten semantischen Konzepte werden auf der GUI ebenfalls angezeigt und dem Nutzer die Auswahl von ein oder mehreren dieser semantischen Konzepte über die GUI ermöglicht. Der Nutzer erfährt also z.B. beim Eingeben des Suchbegriffs "Silber", dass für diesen Suchbegriff mehrere Konzepte (Nachname, Metalltyp, Farbe) bekannt sind. Dem Nutzer wird ermöglicht, diese Konzepte auszuwählen, z.B. mittels sog. "Checkbox", "Dropdown-Listen", "Radio-Button" GUI Elemente oder dergleichen, und hierdurch die Suchabfrage auf ein bestimmtes semantisches Konzept einzugrenzen. Beispielsweise wird durch die Auswahl des Konzepts "Metalltyp" die Suche auf diejenigen Datenobjekte beschränkt, die den Datenwert "Silber" als Bezeichner eines Metalls beinhalten. Die Objekt-IDs dieser Datenobjekte sind sämtlich in der "Metalltyp"-Konzeptliste gespeichert und dem "Silber"-Listenelement zugeordnet.

Nach Ausführungsformen der Erfindung werden zumindest einige der Datenwerte aus Feldern von Datenstrukturen extrahiert, welche die Rohdaten beinhaltenden. Die Felder sind durch die Datenstrukturen festgelegt. Die Felder umfassen ein oder mehrere konzeptbezogene Felder und/oder ein oder mehrere konzeptagnostische Felder.

Ein Feld kann z.B. eine Zelle einer Exceldatei, ein Element einer Datenbanktabelle, ein bestimmtes XML-Element innerhalb eines XML-Objektbaumes sein oder dergleichen. Es entspricht einem vordefinierten Container innerhalb einer Datenstruktur, die zur Speicherung eines oder mehrerer Datenwerte dient. Ein konzeptbezogenes Feld ist ein Feld, dem ein Feldbezeichner zugewiesen ist, wobei der Feldbezeichner ein semantisches Konzept repräsentiert. Ein konzeptagnostisches Feld ist ein Feld, das frei ist von einer semantischen Bedeutungszuweisung. Typischerweise sind zumindest einige der Datenwerte der Rohdaten in konzeptbezogenen Feldern und/oder einige andere Datenwerte der Rohdaten in konzeptagnostischen Feldern gespeichert. Falls beispielsweise eine Exceltabelle geparst wird, von denen weder die Spalten noch die Zeilen einen Bezeichner eines semantischen Konzepts der in der Tabelle enthaltenen Daten enthalten, können die Felder als konzeptagnostische Felder angesehen werden. Falls aber Feldbezeichner vorhanden sind wie z.B. "Vorname", "Nachname", "Geburtsdatum", "Herstellungsdatum", "Gewicht" etc., so handelt es sich um konzeptbezogene Felder.

Das Parsen und Importieren von Datenwerten, die in konzeptbezogenen Feldern gespeichert sind, kann vorteilhaft sein, weil hierdurch automatisch neue semantische Konzepte "gelernt" und in das DVS-System integriert werden können. Auch kann mit einigen wenigen Parsertypen ein immenser Lerneffekt erzielt werden: durch die Definition eines Parsers, der die Datenwerte in Zellen der ersten Zeile der Tabelle als semantische Konzepte interpretiert, denen die Datenwerte unterhalb dieser Zellen in der gleichen Spalte zuzuweisen sind, so kann dieser Parser verwendet werden, um sowohl neue semantische Konzepte wie auch neue Datenwerte aus einer jeglichen Exceltabelle zu importieren, die dem Schema folgt, dass die semantischen Konzepte der jeweiligen Spalte in der ersten (Titel-) Zeile enthalten sind. Falls das DVS-System beim Import der Datenwerde einer Spalte "Nachname" erkennt, dass das semantische Konzept "Nachname" bisher unbekannt war (also keine Konzeptliste für "Nachname" existiert), wird eine solche Konzeptliste vom DVS-System automatisch erstellt und alle Datenwerte dieser Spalte redundanzfrei in dieser Liste gespeichert.

Nach Ausführungsformen der Erfindung speichert das DVS-System diejenigen der Datenwerte, die aus den konzeptbezogenen Feldern extrahiert wurden, in derjenigen der Konzeptlisten, die das semantische Konzept des Feldbezeichners dieser konzeptbezogenen Felder repräsentiert. Nach Ausführungsformen speichert das DVS-System diejenigen der Datenwerte, die aus den konzeptagnostischen Feldern extrahiert wurden, ausschließlich in der konzeptfreien Liste, wenn der verwendete Parser kein semantisches Konzept des Datenwertes erkennt.

Nach Ausführungsformen der Erfindung werden zumindest einige der Datenwerte durch semantische Parser importiert, die die importierten Datenwerte sowie das diesen zugewiesene semantische Konzept auf Basis einer Datenanalyse erkennen, wobei die Datenanalyse insbesondere eine Bildanalyse, eine Audiosignalanalyse, eine statistische Analyse, ein Klassifikationsverfahren, ein Machine-Learning-Verfahren, und/oder ein Mustererkennungsverfahren ist. Gemäß einer Ausführungsform beinhaltet die Vielzahl der verwendeten Parser einen Parser, der Audiodaten klassifiziert und in Text umwandelt, welcher sodann in Wörter zerlegt wird, die als Datenwerte verwendet werden. Zusätzlich oder alternativ dazu kann der Parser die Audiodaten auswerten, um eine Musikrichtung zu erkennen und die Audiodaten in ihrer Gesamtheit als Datenwert zu behandeln, denen die automatisch ermittelte Musikrichtung (z.B. Rock, Techno, Klassik) als semantisches Konzept zugewiesen ist.

Es ist also möglich, dass auch dann, wenn kein Feldbezeichner das semantische Konzept, dem ein Datenwert zugewiesen ist, anzeigt, das semantische Konzept im Zuge des Parsingvorganges dennoch erkannt wird. Beispielsweise kann es sich bei den Rohdaten um digitale Bilder handeln und bei dem Parser um eine Bildanalysesoftware, die bestimmte Objekte (Menschen, Tiere, Pflanzen etc.) erkennen kann. Die Bilder oder Bildsegmente, in welchen ein bestimmtes Objekt erkannt wurde, erhalten eine Objekt-ID und das Bild (oder die Pixeldaten des entsprechenden Bildsegments oder nur der Name des erkannten Objekts ("Mensch", "Hund", "Katze" etc.) werden als geparster "Datenwert" in eine entsprechende Konzeptliste ("Mensch" oder "Hund" etc.) gespeichert. Ob also ein Datenwert in den Rohdaten erkannt und extrahiert werden kann und ob diesem Datenwert ein semantisches Konzept zugewiesen werden kann, kann also von den Feldbezeichnern und/oder den verwendeten Parsern abhängen.

Falls die redundanzfreien Datenwertlisten noch keine Konzeptliste für ein dynamisch erkanntes neues semantisches Konzept (neuer Musikstil, neuer Objekttyp in Bilddaten) enthält, legt das DVS-System vorzugsweise automatisch eine neue Konzeptliste für dieses semantische Konzept an.

Nach Ausführungsformen der Erfindung umfasst das Verfahren ferner:
- nachdem die Datenwerte importiert und gespeichert sind, Bereitstellung eines weiteren Parsers, der dazu ausgebildet ist, Datenwerte zu erkennen und importieren, die zumindest einem neuen semantischen Konzept zugewiesen sind. Ein neues semantisches Konzept ist ein Konzept, das von keinem der aktuell in dem Datenspeicher enthaltenen Konzeptlisten repräsentiert wird;
- Verarbeitung der Rohdaten durch den weiteren Parser, wobei ein oder mehrere neue Datenwerte aus den Rohdaten extrahiert werden, die dem zumindest einen neuen Konzept zugewiesen sind;
- Abgleich des von dem weiteren Parser erkannten zumindest einen neuen semantischen Konzepts mit den Konzeptlisten in dem Datenspeicher durch das DVS-System und automatische Erzeugung und Speicherung einer neuen Konzeptliste für jedes des zumindest einen neuen semantischen Konzepts, für welches der weitere Parser zumindest einen Datenwert extrahiert hat; und
- automatische Speicherung der von dem weiteren Parser aus den Rohdaten extrahierten Datenwerte in diejenige der zumindest einen neuen Konzeptliste, die das neue semantische Konzept repräsentiert, die der weitere Parser diesem Datenwert zugewiesen hat.
- Vorzugsweise erfolgt zudem eine Aktualisierung der konzeptfreien Liste und/oder der globalen Liste derart, dass in der konzeptfreien Liste die dem Datenwert zugewiesenen Objekt-IDs von Datenobjekten, die den Datenwert enthalten, denen der neue Parser erstmals das neue Konzept zuweisen konnte, gelöscht werden. Diese Objekt-IDs sind diesem Datenwert ja in der neuen Konzeptliste zugewiesen. In der konzeptfreien Liste verbleiben für diesen Datenwert also die Objekt-IDs derjenigen Datenobjekte, die den Datenwert enthalten aber denen auch der weitere Parser kein Konzept zuweisen konnte.

Somit können die gleichen Rohdaten durch neue und verbesserte Parser auch nachträglich ausgewertet werden und das dabei extrahierte Wissen kann nahtlos in bestehende Listenstrukturen integriert und durchsuchbar gemacht werden.

Nach Ausführungsformen umfasst das Verfahren ferner:
- Empfang einer Suchanfrage zur Ermittlung von Datenobjekten, die ein oder mehrere konzeptbezogene Suchkriterien und/oder ein oder mehrere konzeptagnostische Suchkriterien erfüllen, wobei ein konzeptbezogenes Suchkriterium ein Suchkriterium ist, dem ein Identifikator eines semantischen Konzepts zugewiesen ist, wobei ein konzeptagnostisches Suchkriterium ein Suchkriterium ist, dem kein semantisches Konzept zugewiesen ist;
- Durchsuchung der konzeptfreien Liste nach ein oder mehreren Datenwerten, die jedes der empfangenen konzeptagnostischen Suchkriterien erfüllen; Beispielsweise kann die Suche eine Suche nach identischen oder ähnlichen Datenwerten in Bezug zu dem Suchbegriff sein; für Ähnlichkeitssuchen können z.B. reguläre Ausdrücke verwendet werden; und/oder
- Für jedes der empfangenen konzeptbezogenen Suchkriterien, Durchsuchung selektiv derjenigen der Konzeptlisten, die das semantische Konzept dieses Suchkriteriums repräsentiert, nach ein oder mehreren Datenwerten, die das konzeptbezogene Suchkriterium erfüllen;
- Zurückgabe der Objekt-IDs oder einer Untermenge dieser Objekt-IDs, die Datenwerten zugewiesen sind, die bei der Durchsuchung der globalen Liste und/oder der zumindest einen Konzeptliste ermittelt wurden in Antwort an die Suchanfrage durch das DVS-System.

Aufgrund der immensen Komprimierung und der automatischen Aufsplittung der Datenwerte in verschiedene Listen je nach semantischem Konzept können auch immense Rohdatenmengen nach Transformation der in ihnen enthaltenen Datenwerte in die Listenstrukturen sehr schnell auch auf leistungsschwachen Rechnern verarbeitet werden.

Gemäß bevorzugten Ausführungsformen der Erfindung sind die Datenwerte jeder der Listen sortiert, d.h., nach einer Ordnungsrelation (z.B. alphabetische Ordnung bei Datenwerten, die aus alphanumerischen Zeichenfolgen bestehen) geordnet. Dies kann die Suche in den Listen nach bestimmten Datenwerten beschleunigen, da die Suche abgebrochen werden kann, wenn auf Basis der Ordnungsrelation nach dem Durchlaufen eines Datenwerts der Liste festgestellt wird, dass der Datenwert nicht in der Liste enthalten sein kann.

Nach Ausführungsformen umfasst das Verwenden der redundanzfreien Listen) zur Durchführung der angefragten Suche und/oder der Datenanalyse die Durchführung einer Mengenoperation auf Mengen von Objekt-IDs, die Datenwerten in zwei oder mehr der redundanzfreien Listen zugewiesen sind, wobei die Mengenoperation insbesondere eine Berechnung einer Schnittmenge, einer Vereinigungsmenge, einer Differenzmenge oder einer Symmetrischen Differenzmenge umfasst.

Beispielsweise können in mehreren Konzeptlisten und/oder der konzeptfreien Liste jeweils ein Datenwert ("Matchwert") oder mehrere Matchwerte erkannt werden, der bzw. die jeweils identisch oder am stärksten ähnlich zu einem Suchbegriff einer Suchabfrage ist bzw. sind. Durch Anwendung einer Vereinigungsmengenbildungsoperation auf die Mengen der Objekt-IDs, die diesen Matchwerten einer einzelnen dieser Konzeptlisten jeweils zugewiesen sind, wird die vereinigte Gesamtheit derjenigen der Datenobjekte ermittelt, die alle Matchwerte dieser einen Konzeptliste enthalten. Durch Anwendung einer Schnittmengenbildungsoperation auf die Mengen der Objekt-IDs, die im Vereinigungsmengenbildungsschritt für die verschiedenen Konzeptlisten erhalten wurden, wird die Schnittmenge derjenigen der Datenobjekte ermittelt, die für jeder der Konzeptlisten, auf welche sich ein Suchkriterium der Anfrage bezog, zumindest einen Matchwert enthalten. Diese Schnittmenge kann als Ergebnis der Suchanfrage zurückgegeben und/oder für weitere Analysen verwendet werden.

Nach Ausführungsformen werden die Datenwerte der konzeptfreien Liste und/oder der ein oder mehreren Konzeptlisten jeweils verknüpft mit ein oder mehreren Zeitangaben gespeichert, wobei die Zeitangaben jeweils einen Transaktionszeitpunkt für die initiale Erzeugung eines Datenwertes oder einen Zeitpunkt des Imports eines Datenwerts durch das DVS-System beinhalten. Das Verfahren umfasst ferner eine Berücksichtigung der Zeitangaben durch das DVS-System, um die Suchanfrage zu beantworten und/oder die Datenanalyse durchzuführen.

Beispielsweise kann dem Datenwert "Frankfurt" der Konzeptliste "Firmensitz" die Zeit "ab dem 13.03.1978" in Verbindung mit der Objekt-ID auf einen Handelsregisterauszug Nr. 238 der Firma "Gelb AG" zugewiesen sein, dem diese Zeitangabe entnommen ist. Außerdem kann dem Datenwert "Berlin" der Konzeptliste "Firmensitz" die Zeit "ab dem 16.07.2012" in Verbindung mit einer Objekt-ID auf einen Handelsregisterauszug Nr. 46474, dem diese Zeitangabe entnommen ist, derselben Firma "Gelb AG" zugewiesen sein. Durch Abfrage sämtlicher "Firmensitz"-Datenwerte der Firma "Gelb AG" kann also auch ein chronologischer Verlauf der Firmensitzverlegungen rekonstruiert werden, da das Datenobjekt und dessen Objekt-ID, aus dem ein Datenwert extrahiert wurde, mit dieser Zeitangabe verknüpft ist.

Nach Ausführungsformen der Erfindung stehen zumindest einige der Datenobjekten in Relation zu anderen Datenobjekten. Diese Relationen können z.B. Relationen wie "ist Bestandteil von", "beinhaltet", "gehört zu Klasse", "aktiviert", "inhibiert", "ist_verbaubar_in" oder dergleichen sein. Die Relationen können bereits explizit oder implizit in den Rohdaten enthalten und im Zuge des Parsingprozesses extrahiert werden. Es ist aber auch möglich, dass das DVS-System die Relationen erst im Zuge einer später durchgeführten Datenverarbeitungsoperation auf den Rohdaten und/oder auf den Datenwerten der bereits gespeicherten redundanzfreien Listen extrahiert.

Jede extrahierte Relation eines der Datenobjekte ("erstes Datenobjekt") zu einem anderen der Datenobjekte ("zweites Datenobjekt") wird in Form einer Kombination (insbesondere einer Konkatenation) aus einem Relationstyp (also dem Bezeichner der Relation wie z.B. "ist_verbaubar_in" und der Objekt-ID des zweiten Datenobjekts extrahiert. Jede der extrahierten Kombinationen wird als einer der Datenwerte in der konzeptfreien Liste und/oder in der zumindest einen Konzeptliste gespeichert, wobei in der konzeptfreien Liste und/oder der zumindest einen Konzeptliste jeder der extrahierten Kombinationen die Objekt-IDs derjenigen der ersten Datenobjekte zugewiesen sind, zu welchem die in der Kombination bezeichnete Relation besteht.

Beispielsweise kann eine derartige Extraktion und Speicherung von Objektrelationen dazu genutzt werden, "offene" Suchanfragen zu formulieren, die den Kontext eines bestimmten Objekts einschließlich der Menge an Objekten, die auf dieses Suchobjekt verweisen sowie die Art der Relationen zu extrahieren.

Gemäß Ausführungsformen werden auch die Objekt-IDs der Datenobjekte, die während des Parsens ermittelt werden, als Datenwerte behandelt und z.B. in die Konzeptliste "Objekt-IDs" gespeichert (sowie optional zusätzlich in der globalen Liste).

Beispielsweise kann die Objekt-ID der Datenobjekte als Datenwert extrahiert und in einer Konzeptliste "Objektidentifikatoren" gespeichert sein. Die Objektidentifikatoren-Konzeptliste kann nach einer bestimmten Objekt-ID (Such-Objekt-ID) durchsucht werden, um einen Datenwert in dieser Liste zu finden, der identisch ist zu der Such-Objekt-ID. Danach werden die IDs aller Datenobjekte ermittelt, die diesem ermittelten Datenwert in der Objektidentifikatoren-Konzeptliste zugewiesen sind. Neben dem Datenobjekt das identisch ist zu dem Suchobjekt sind dies auch alle Datenobjekte, die eine Relation auf das Suchobjekt haben, denn auch diese enthalten den Objekt-ID des Suchobjekts.

Neben der oben beschriebenen Suche nach einem "identischen" Match ist es auch möglich, mit einem regulären Ausdruck, der die Objekt-ID des Suchobjekts enthält, die globale Liste zu durchsuchen. Beispielsweise könnte die globale Liste viele Datenwerte enthalten, die Relationen abbilden, wie z.B. "ist_verbaubar_in_Motor_XL-3000", "ist_leistungsequivalent_zu_Motor_XL-3000", "wird_aktiviert_von_p53_Gen" etc., wobei die Bestandteile "Motor_XL-3000" bzw. "p53_Gen" Objekt-IDs darstellen. Anhand einer Suche mit einem regulären Ausdruck, der nur die Objekt-ID als die Suchobjekt-ID festlegt und den Relationstypbezeichner offen lässt, können zunächst in der globalen Liste sämtliche Datenwerte ermittelt werden, die die Such-Objekt-ID als Bestandteil des Datenwerts enthalten, also auch alle Relationstypen, die sich auf das Suchobjekt beziehen. Die so ermittelten Datenwerte der globalen Liste verweisen auf entsprechende Kontextlisten, also z.B. auf die Kontextlisten für die semantischen Konzepte "ist_verbaubar_in" und "ist_leistungsequivalent_zu". Die Konzeptliste "ist_verbaubar_in" kann einen Datenwert. "ist_verbaubar_in_Motor_XL-3000" enthalten, dem ein erster Satz an Objekt-IDs zugewiesen ist. Die Konzeptliste "ist_leistungsequivalent_zu" kann den Datenwert "ist_leistungsequivalent_zu_Motor_XL-3000" beinhalten, dem ein zweiter Satz an Objekt-IDs zugewiesen ist. Die Vereinigungsmenge des ersten und zweiten Satzes an Objekt-IDs ergibt somit die Gesamtheit an Datenobjekten, die entweder "verbaubar in" oder "leistungsequivalent zu" dem Suchobjekt "Motor_XL_3aaa" sind.

Gemäß Ausführungsformen der Erfindung umfasst das Verfahren:
- Empfang einer Suchanfrage oder eines Analysekommandos zur Ermittlung aller Datenobjekte, die eine Relation zu einem Suchdatenobjekt haben, wobei die Anfrage oder das Kommando eine Suchobjekt-ID enthält;
- Durchsuchen der globalen Liste um alle Datenwerte zu ermitteln, die aus einer Kombination eines Relationstyps und einer Objekt-ID, die identisch ist zu der Suchobjekt-ID, bestehen;
- Identifikation von ein oder mehreren Konzeptlisten, auf welche die in der globalen Liste ermittelten Datenwerte verweisen;
- Durchsuchen der ein oder mehreren identifizierten Konzeptlisten, um Datenwerte zu ermitteln, die aus einer Kombination eines Relationstyps und einer Objekt-ID, die identisch ist zu der Suchobjekt-ID, bestehen;
- Zurückgabe der Objekt-IDs, die den ermittelten Datenwerten in den ein oder mehreren Konzeptlisten zugewiesen sind, also IDs derjenigen Datenobjekte, die eine Relation zu dem Suchobjekt habe

Somit können höchst komplexe Suchanfragen und auch Ähnlichkeitssuchen (Fuzzy-Suchen mit regulären Ausdrücken) auf höchst flexible, skalierbare und performante Weise durchgeführt werden, ohne dass hierfür ein Datenbankindex in Form eines B-Baumes erstellt und ggf. bei der Integration neuer Datenobjekttypen oder Suchanfragen angepasst werden müsste. Für jedes Suchobjekt kann somit sehr schnell herausgefunden werden, welche Relationstypen in Bezug auf das Suchobjekt überhaupt bestehen und Wie viele und welche anderen Objekte über einen oder mehrere dieser Relationstypen auf das Suchobjekt referenzieren bzw. mit diesem verbunden sind.

Dies kann insbesondere im Kontext von "Industrie 4.0" Anwendungen oder bei der Bestellung und/oder Konfiguration von hochkomplexen Bauteilen (Flugzeugturbinen und Motore) vorteilhaft sein: Komplexe Bauteile oder Systemkomponenten können aus mehreren Tausend Komponenten bestehen, die wiederum aus Unterkomponenten bestehen können. Wenn in einem Datenbestand eines Automobil- oder Flugzeugherstellers eine große Menge an Komponenten enthalten ist, ermöglicht es diese Art der Relationsabfrage sehr schnell, festzustellen, welche Datenobjekte z.B. die Relation "ist-Bestandteil-von-Motor-XM-300049 BT" ist.

Nach Ausführungsformen der Erfindung umfasst das Verfahren ferner:
- Bereitstellung einer Mappingtabelle durch das DVS-System, wobei die Mappingtabelle jedem Datenwert in der konzeptfreien Liste und jedem Datenwert in jeder der Konzeptlisten je einen oder mehrere Identifikatoren zuweist;
- Erzeugen von obfuskierten Kopien der konzeptfreien Liste und jeder der Konzeptlisten durch das DVS-System, wobei in den obfuskierten Kopien die Datenwerte jeweils durch einen diesem Datenwert in der Mappingtabelle zugewiesenen Identifikator ersetzt sind;
- Verwenden der obfuskierten Listen zur Durchführung der Suchanfrage und/oder Analyse durch das DVS-System.

Dies kann den Vorteil haben, dass die Sicherheit der Daten erhöht wird. Beispielsweise können die Mappingtabelle und die obfuskierten Listenkopien auf unterschiedlichen Computersystemen bereitgestellt und/oder in getrennten IT-Sicherheitsumgebungen gespeichert und verwendet werden. Falls ein unberechtigter Dritter sich Zugriff auf die obfuskierten Listen verschafft, kann er ohne die Mappingtabelle den Inhalt der Listen nicht erkennen. Auch ein Zugriff auf die Mappingtabelle an sich ist unschädlich, da sie keine Objekt-IDs enthält, die eine Rekonstruktion der Zuweisung von Datenwerten zu Objekten erlauben würden. Der unberechtigte Dritte müsste also in zwei getrennte Computersysteme oder zwei separate Sicherheitssysteme eindringen, um die ursprünglichen Listen rekonstruieren zu können. Somit wird ein besonders sicheres Datenverwaltungs- und Suchverfahren bereitgestellt.

Nach Ausführungsformen sind die Identifikatoren Werte, deren Länge und/oder Art in Abhängigkeit von der Prozessorarchitektur des zur Suche und/oder Analyse verwendeten Computersystems abhängt, also in Abhängigkeit von diesen Faktoren gewählt wurden. Insbesondere werden die Länge und/oder Art der Identifikatoren so gewählt, dass sie sehr schnell von der Prozessorarchitektur verarbeitet werden können. Beispielsweise kann die Länge der Identifikatoren der Verarbeitungsbreite der Prozessorarchitektur entsprechen (z.B. 32 Bit bei 32 Bit Architekturen, 64 Bit bei 64 Bit Architekturen). Falls die Prozessorarchitektur numerische Werte besonders effizient verarbeiten kann, können die Identifikatoren aus numerischen Werten bestehen. Falls die Prozessorarchitektur andere Wertetypen (z.B. Symbole) besonders effizient verarbeiten kann, können die Identifikatoren aus Symbolen bestehen.

Gemäß Ausführungsformen werden bei der Suche oder Analyse anhand der Mappingtabelle ein Suchwert-Identifikator ermittelt, wobei der Suchwertidentifikator ein Identifikator ist, der dem Suchwert in der Mappingtabelle zugewiesen ist.

Gemäß Ausführungsformen der Erfindung haben alle Identifikatoren eine festgelegte Länge, insbesondere eine identische Länge, die vorzugsweise so gewählt ist, dass jeder Identifikator vollständig in das Arbeitsregister der ALU des zumindest einen Prozessors passt, welcher das Verfahren gemäß Ausführungsformen der Erfindung durchführt. Somit werden gemäß Ausführungsformen der Erfindung die Identifikatoren miteinander und/oder mit einem Suchwertidentifikator in einem einzigen Arbeitstakt der ALU miteinander verglichen.

Dies kann vorteilhaft sein, da durch das Ersetzen der Datenwerte durch ein oder mehrere der Identifikatoren nicht nur ein verbesserter Schutz des Inhalts der Daten vor unberechtigtem Zugriff, sondern zusätzlich auch noch eine effizientere Verarbeitung der Daten im Zuge der Bearbeitung der Suchanfragen und Datenanalysen erreicht werden kann.

Nach Ausführungsformen der Erfindung umfasst das Verfahren ferner:
- Verschlüsseln der Konzeptlisten und der konzeptfreien Liste durch das DVS-System, oder Verschlüsseln der obfuskierten Konzeptlisten und der obfuskierten konzeptfreien Liste durch das DVS-System;
- In Antwort auf den Empfang der Suchanfrage oder eines Datenanalysekommandos, Identifikation derjenigen der verschlüsselten Listen, die zur Bearbeitung der Suchanfrage oder des Datenanalysekommandos verarbeitet werden müssen;
- Authentifizierung des Absenders der Suchanfrage gegenüber dem DVS-System, wobei das DVS-System für jede der identifizierten Listen individuell prüft, ob der Absender zum Zugriff auf den Inhalt der Liste berechtigt ist;
- Erzeugung entschlüsselter Kopien selektiv derjenigen der identifizierten Listen, für welcher sich der Absender als zugriffsberechtigt authentifiziert hat, durch das DVS-System;
- Durchführung der Suchanfrage oder der Datenanalyse auf den entschlüsselten Listenkopien;
- Nach Durchführung der Suchanfrage oder der Datenanalyse, Löschen der entschlüsselten Listenkopien durch das DVS-System.

Dies kann den Vorteil haben, dass die vom DVS-System erzeugte und verwalteten Listen primär unlesbar, da verschlüsselt sind. Die zur Entschlüsselung nötigen kryptographischen Schlüssel werden vorzugsweise sicher gespeichert, z.B. auf einem HSM oder in einer vergleichbar sicheren Umgebung. Das bedeutet, dass ein unberechtigter Dritter, der die Listen oder eine Kopie der Listen in seinen Besitz bringt, die darin enthaltenen Daten nicht lesen kann. Nur in Antwort auf eine Suchanfragen oder ein Analysekommando werden einige der Listen, die zur Beantwortung der Anfrage gelesen werden müssen, temporär entschlüsselt. Somit kann ein flexibel erweiterbares, ressourcenschonendes und dabei noch sicheres Verfahren zur Verwaltung und zum Durchsuchen von Daten bereitgestellt werden.

Nach bevorzugten Ausführungsformen verwendet das DVS-System für die Verschlüsselung jeder der Listen ein unterschiedlicher Verschlüsselungsschlüssel. Dies kann die Sicherheit weiter erhöhen.

Nach Ausführungsformen repräsentieren zumindest eine der Konzeptlisten genomische Marker mehrerer Individuen einer Spezies oder Sub-Spezies, wobei zumindest eine weitere der Konzeptlisten metabolische oder phänotypische Merkmale dieser Individuen repräsentieren. Das DVS-System führt die Datenanalyse mittels Mengenoperationen auf den Listen durch. Die Datenanalyse beinhaltet eine Korrelationsanalyse von genomischen Markern einerseits und den metabolischen oder phänotypischen Merkmalen andererseits. Somit wird eine neue, sehr effiziente Form der Durchführung von sogenannten "genomweiten Assoziationsstudien - GWA" bereitgestellt.

Nach anderen Ausführungsformen spezifizieren zumindest einige der Datenwerte der globalen Liste und/oder der zumindest einen Konzeptliste eine "ist-Bestandteil-von" Relation zu anderen Objekten einschließlich einer Objekt-ID dieses anderen Objekts, wobei zumindest eine weitere der Konzeptlisten metabolische oder phänotypische Merkmale dieser Individuen repräsentieren. Das DVS-System führt die angefragte Suche durch, wobei das Suchkriterium eine Kombination des Relationstyps "ist-Bestandteil-von" und einer Objekt-ID beinhaltet, wobei die Objekt-ID des Suchkriteriums eine Maschine oder ein Fahrzeug oder ein Mehrkomponentenbauteil dieser Maschine oder des Fahrzeugs repräsentiert.

Nach anderen Ausführungsformen sind zumindest einige der Datenwerte der globalen Liste und/oder der zumindest einen Konzeptliste Wörter einer natürlichen Sprache. Das DVS-System führt die Datenanalyse mittels Mengenoperationen auf den Listen durch. Die Datenanalyse beinhaltet eine Korrelationsanalyse von Wörtern zur Erstellung eines prädiktiven Modells dieser natürlichen Sprache.

In einem weiteren Aspekt betrifft die Erfindung ein flüchtiges oder nicht-flüchtiges Speichermedium, auf welchem computerlesbare Instruktionen gespeichert sind, wobei die Instruktionen dazu ausgebildet sind, einen Prozessor dazu zu veranlassen, ein Verfahren zur Speicherung von Daten in einem Datenspeicher gemäß einem der vorigen Ansprüche auszuführen.

Gemäß einer Ausführungsform ist der Datenspeicher, in welchem die redundanzfreien Datenwertlisten gespeichert sind, ein Arbeitsspeicher. Bei dem Arbeitsspeicher kann es sich um den Arbeitsspeicher eines Prozessors, insbesondere eines Prozessors eines Einplatinenrechners wie z.B. eines Raspberry-Pi-Rechners, handeln.

In einem weiteren Aspekt betrifft die Erfindung mehrere redundanzfreie Datenwertlisten. Die Datenwertlisten umfassen mehrere Konzeptlisten und eine konzeptfreie Liste. Optional können die redundanzfreien Datenwertlisten auch eine globale Liste umfassen. Die die redundanzfreien Listen enthalten Datenwerte und Objekt-IDs von Datenobjekten, die jeweils ein oder mehrere dieser Datenwerte enthalten. Jede der Konzeptlisten jeweils ein semantisches Konzept repräsentiert und eine nicht-redundante Liste selektiv diejenigen der Datenwerte beinhaltet, denen das semantische Konzept dieser Konzeptliste zugewiesen ist, wobei jedem der Datenwerte in der Konzeptliste alle Objekt-IDs derjenigen Datenobjekte zugewiesen sind, die diesen Datenwert beinhalten, wobei der beinhaltete Datenwert eine Repräsentation des semantischen Konzepts dieser Konzeptliste ist. Die konzeptfreie Liste beinhaltet selektiv diejenigen der Datenwerte, denen kein semantisches Konzept zugewiesen ist, wobei jedem der Datenwerte in der konzeptfreien Listen alle Objekt-IDs derjenigen Datenobjekte zugewiesen sind, die diesen Datenwert beinhalten, wobei dem beinhalteten Datenwert dieses Datenobjekts kein semantisches Konzept zugewiesen ist.

In einem weiteren Aspekt betrifft die Erfindung eine Verwendung der redundanzfreien Datenwertlisten zur Suche und/oder Analyse der in diesen Listen enthaltenen Datenwerte. Typischerweise wird die Suche und/oder Analyse von dem gleichen DVS-System durchgeführt, welches die Listen erstellt hat. Es ist aber auch möglich, dass die Suche von einem anderen System, z.B. einem anderen DVS - System, durchgeführt wird als dem, das die Listen erzeugt hat.

In einem weiteren Aspekt betrifft die Erfindung ein Computersystem zur Speicherung von Daten. Das Computersystem umfasst zumindest einen Prozessor, einen Datenspeicher und ein Datenverarbeitungs- und Suchsystem - DVS-System. Das DVS-System ist dazu ausgebildet, die in dem Datenspeicher gespeicherten Daten zu verwalten und zu durchsuchen, und dazu ausgebildet ist, den zumindest einen Prozessor zur Durchführung eines Verfahrens zu veranlassen umfassend:
- Empfang von Rohdaten oder von Zugriffsadressen der Rohdaten durch ein Datenverarbeitungs- und Suchsystem - DVS-System, wobei die Rohdaten unterschiedliche Strukturen haben;
- Parsen der Rohdaten durch mehrere verschiedene Parser zur Ermittlung von Datenobjekten mit je ein oder mehreren Datenwerten und einer Objekt-ID jedes der Datenobjekte, wobei zumindest einigen der Datenwerte jeweils ein semantisches Konzept zugewiesen wird;
- automatischer Import der Parsingergebnisse durch das DVS-System;
- automatische Speicherung aller Parsingergebnisse in Form von redundanzfreien Datenwert-Listen in dem Datenspeicher durch das DVS-System, wobei die redundanzfreien Listen umfassen:
   - ein oder mehrere Konzeptlisten, wobei jede der Konzeptlisten jeweils ein semantisches Konzept repräsentiert und eine nicht-redundante Liste selektiv diejenigen der importierten Datenwerte beinhaltet, denen beim Parsen das semantische Konzept dieser Konzeptliste zugewiesen wurde, wobei jedem der Datenwerte in der Konzeptliste alle Objekt-IDs derjenigen Datenobjekte zugewiesen sind, die diesen Datenwert beinhalten, wobei der beinhaltete Datenwert eine Repräsentation des semantischen Konzepts dieser Konzeptliste ist;
   - eine konzeptfreie Liste, wobei die konzeptfreie Liste selektiv diejenigen der importierten Datenwerte beinhaltet, denen beim Parsen kein semantisches Konzept zugewiesen wurde, wobei jedem der Datenwerte in der konzeptfreien Listen alle Objekt-IDs derjenigen Datenobjekte zugewiesen sind, die diesen Datenwert beinhalten, wobei dem beinhalteten Datenwert dieses Datenobjekts beim Parsen kein semantisches Konzept zugewiesen werden konnte; und
- Bereitstellen der redundanzfreien Listen durch das DVS-System, um eine Suchanfrage zu beantworten und/oder eine Datenanalyse durchzuführen.

Gemäß Ausführungsformen enthält der zumindest eine Prozessor eine Arithmetisch-logische Einheit - ALU, die dazu ausgebildet ist, eine Mengenoperation auf Mengen von Objekt-IDs, die Datenwerten in zwei oder mehr der redundanzfreien Listen zugewiesen sind, auszuführen, wobei die Mengenoperation insbesondere eine Berechnung einer Schnittmenge, einer Vereinigungsmenge, einer Differenzmenge oder einer Symmetrischen Differenzmenge umfasst. Insbesondere können die Mengenoperationen durch die ALU so ausgeführt werden, dass ein Vergleich zweier Objekt-IDs innerhalb eines einzigen Arbeitstaks (Vergleichsoperation) der ALU ausgeführt wird.

Unter einem "Prozessor" wird hier ein (meist sehr stark verkleinertes und meist frei) programmierbares Rechenwerk, also eine Maschine oder eine elektronische Schaltung, verstanden, die gemäß übergebenen Befehlen andere Maschinen oder elektrische Schaltungen steuert und dabei einen Algorithmus (Prozess) vorantreibt, was meist Datenverarbeitung beinhaltet. Der Prozessor kann z.B. als ein Hauptprozessor, eine Zentrale Recheneinheit oder (allgemeiner) Zentrale Verarbeitungseinheit (kurz ZVE, englisch central processing unit, kurz CPU) für Computer oder computerähnliche Geräte, in denen sie Befehle ausführen, ausgebildet sein. Der Prozessor kann auch als Mikrocontroller in eingebetteten Systemen (etwa in Haushaltsgeräten, Ticketautomaten, Smartphones usw.) ausgebildet sein.

Gemäß Ausführungsformen wird zumindest einer der Schritte des Verfahrens von einer Untereinheit eines Prozessors direkt ausgeführt.

Insbesondere können gemäß Ausführungsformen der Erfindung die Mengenoperationen auf den Objekt-IDs direkt von der arithmetisch-logischen Einheit (englisch arithmetic logic unit, daher oft abgekürzt ALU) des zumindest einen Prozessors ausgeführt werden. Eine ALU kann zwei Binärwerte mit gleicher Stellenzahl (n) miteinander verknüpfen. Man spricht von n-Bit-ALUs. Typische Werte für n sind 8, 16, 32 und 64. Gemäß Ausführungsformen der Erfindung haben alle Objekt-IDs eine festgelegte Länge, insbesondere eine identische Länge, die vorzugsweise so gewählt ist, dass jede Objekt-ID vollständig in das Arbeitsregister der ALU passt, und können im Zuge der Mengenoperationen in der ALU miteinander verglichen werden. Insbesondere kann die ALU, um zwei Mengen von Objekt-IDs miteinander zu vergleichen, z.B. um eine Schnittmenge, eine Vereinigungsmenge, eine Differenzmenge oder eine Symmetrische Differenzmenge zu berechnen, alle Objekt-IDs der einen Menge mit allen Objekt-IDs der anderen Menge auf Identität vergleichen.

Unter "Rohdaten" werden hier jegliche Daten verstanden, die in elektronischer Form vorliegen und noch nicht in einer von einem Parser des DVS-Systems geparsten Form vorliegen. Die Rohdaten umfassen insbesondere Daten, die bei einer Beobachtung, einer Messung oder einer Datenerhebung unmittelbar gewonnen werden und die noch unbearbeitet vorliegen. Die "Rohdaten" im Sinne dieser Erfindung umfassen jedoch auch Daten, die von den primär erhobenen Daten abgeleitet wurden, wobei die Ableitung allerdings nicht von einem zum Import von Daten in das DVS-System verwendeten Parser vorgenommen wurde. Unter Rohdaten sind also Daten zu verstehen, deren Gewinnung und Speicherung typischerweise völlig unabhängig von der Existenz oder dem Zutun eines DVS-Systems erzeugt und gespeichert wurden.

Unter **"Zugriffsadressen"** werden hier Angaben verstanden, die es einem Datenverarbeitungssystem ermöglichen, auf Daten, die unter diesen Zugriffsadressen verfügbar gemacht wurden, zumindest lesend zuzugreifen. Eine Zugriffsadresse kann z.B. eine URL auf einen über ein Netzwerk verfügbare Datei, eine lokale dateisystembasierte Adresse der Datei, eine Angabe zum Namen einer Datenbank und darin befindlicher Datenbanktabelle mit einem bestimmten Datensatz sein oder dergleichen.

Unter einem **"Datenverarbeitungs- und Suchsystem - DVS-System"** wird hier ein software- und/oder hardware-basiertes System zur Speicherung, Verwaltung und Verarbeitung elektronischer Daten verstanden. Gemäß Ausführungsformen der Erfindung ist das DVS-System darauf ausgelegt, große Datenmengen effizient, widerspruchsfrei und dauerhaft zu speichern. Gemäß Ausführungsformen kann das DVSSystem mehrere Komponenten, die als Module ausgebildet sein können, umfassen: eine Importkomponente zum Empfangen und Parsen von Rohdaten und zum Speichern der geparsten Daten in nicht-redundanten Listen. Hierbei kann die Importkomponente vorhandene Listen nutzen und ggf. neue Listen automatisch erstellen. Das DVS-System kann zudem eine Such- und Analysekomponente umfassen, die zum Durchsuchen und/oder zur Analyse der Listen dient. Optional kann das DVS-System eine GUI beinhalten, die es Nutzern erlaubt, die zu parsenden Rohdaten und/oder zu importierende Konzept- Datenwert-Paare (Schlüssel-Wert-Paare) und/oder Suchbegriffe und/oder Analysekommandos einzugeben. Das DVS-System hat Lese- und Schreibzugriff auf einen von diesem verwalteten Datenspeicher. Nach Ausführungsformen umfasst das DVS-System den Datenspeicher und die in diesem gespeicherten Listen. Optional kann das DVS-System ferner einen Dokumentenspeicher zur Speicherung zumindest einiger der Rohdaten umfassen.

Unter einem **"Datenobjekt"** oder "Datensatz" wird hier eine Gruppe von inhaltlich zusammenhängenden (zu einem Objekt gehörenden) Datenwerten, z. B. Artikelnummer und Artikelname und Herstellungsdatum verstanden. Datensätze entsprechen einer logischen Struktur von Datenwerten, die bei der Speicherung der Daten eines Datenobjekts festgelegt wurde oder die erst beim Parsen von Daten erkannt wird. Falls es sich bei den geparsten Rohdaten z.B. um Bilder handelt, kann es sich bei den einzelnen erkannten, im Bild abgebildeten Objekten um "Datenobjekte" im Sinne der Erfindung handeln. Es ist aber auch möglich, dass die Matrix an Pixelinformationen eines Bildes in seiner Gesamtheit das Datenobjekt "Bild" ausmacht. In diesem Fall ist das digitale Bild das Datenobjekt und ein Identifikator des Bildes kann als Objekt-ID verwendet werden.

Die in den Rohdaten enthaltenen Datenobjekte umfassen also explizit als eigene Objekte in den Rohdaten ausgewiesene Datensätze (z.B. einzelne Zeilen einer Exceltabelle mit zeilenweise orientierten Datensätzen) wie auch dynamisch im Zuge des Parsingprozesses erkannte und extrahierte Datenobjekte. Letztere stellen "implizit" in den Rohdaten enthaltene Datenobjekte dar.

Unter einem **"Datenwert"** wird hier die kleinste auswertungsfähige Einheit eines Datensatzes verstanden. Was als kleinste auswertungsfähige Einheit angesehen wird, hängt vom Anwendungskontext ab, z.B. von dem Parser, der die Datenwerte und optional auch deren semantische Bedeutung in den Rohdaten erkennen und extrahieren soll. Beispielsweise könnte ein Bildanalyse-Parser dazu ausgebildet sein, Muster eines digitalen Bildes auf der Bitebene zu erkennen. In diesem Fall wären die Datenwerte Binärwerte verknüpft mit Pixel-Positionsdaten. Gemäß einem anderen Beispiel könnte der Parser die Mustererkennung basierend auf Intensitätswerten einzelner Pixel erkennen. Dann könnte ein Datenwert ein Intensitätswert an einer bestimmten Pixelposition sein. Je nach Art der Rohdaten kann der Datenwert eine Sequenz aus alphanumerischen Zeichen (z.B. ein Wort, eine Peptidsequenz, eine Nukleotidsequenz), eine Zahl (z.B. Gewichts- oder Größenangaben) oder ein Binärobjekt (Bild-, Audio- oder Videodatei) sein.

Unter einem **"Parser"** wird hier in Parser wird hier ein Computerprogramm oder Programmmodul verstanden, das für die Zerlegung und Umwandlung einer Eingabe in ein für die Weiterverarbeitung geeigneteres Format zuständig ist. Insbesondere kann ein Parser dazu dienen, die Bedeutung (die Semantik, das semantische Konzept) der in der Eingabe explizit oder implizit enthaltenen Datenwerte zu erkennen und das erkannte semantische Konzept eines extrahierten Datenwertes verknüpft mit diesem Datenwert zur Weiterverarbeitung weiterzureichen. Typischerweise gibt ein Parser die von ihm verarbeiteten Rohdaten in einer gewünschten Form aus, welche zusätzliche semantische Angaben enthält. Beispielsweise können die zum Import von Daten in ein DVS-System verwendeten Parser die geparsten Datenwerte und deren semantische Konzepte in Form von Schlüssel-Wert Paaren ausgeben, die dann in bestehende Listen gespeichert werden oder als Basis zur automatischen Erstellung neuer Konzeptlisten dienen. Bei einem Parser kann es sich aber auch um einen rein syntaktischen Parser handeln, der eine Datenstruktur mit Rohdaten gemäß eines bestimmten Zerlegungs- und/oder Extraktionsschema verarbeitet, um einen oder mehrere Datenwerte aus den Rohdaten zu extrahieren.

Unter einer "**redundanzfreien"** Datenwert-Liste wird hier eine Liste von Datenwerten verstanden, die jeden Datenwert nur ein einziges Mal enthält.

Unter einem "**Datenspeicher"** ist ein Speichermedium oder ein Speicherbereich auf einem Speichermedium oder eine Kombination mehrerer Speichermedien oder Speicherbereiche, das bzw. die zur Speicherung von Daten verwendet wird. Falls der Datenspeicher mehrere Speichermedien oder Speichermedienbereiche umfasst, können diese miteinander zu einem logischen Datenspeicher verbunden sein. Hierbei können die Speichermedien oder Speichermedienbereiche z.B. über ein Netzwerk oder über einen Bus eins Computersystems operativ miteinander verbunden sein. Beispielsweise kann ein Datenspeicher, der von dem DVS-System verwaltet wird, ein Datenspeicher sein, auf dessen Daten ausschließlich das DVS-System Zugriff hat.

Unter einer "**Konzeptliste"** wird hier eine nichtredundante und vorzugsweise sortierte Liste von Datenwerten verstanden, wobei jede Konzeptliste ein bestimmtes semantisches Konzept repräsentiert und ausschließlich Datenwerte enthält, welchen beim Import eben dieses semantische Konzept zugewiesen wurde. Die Objekt-IDs, die in einer Konzeptliste einem bestimmten Datenwert bzw. Listenelement zugewiesen sind, umfassen nur Objekt-IDs von Datenobjekten, die diesen Datenwert bzw. Listenelement enthielten und denen beim Import dieses semantische Konzept zugewiesen wurde.

Unter einer "**konzeptfreien Liste"** wird hier eine nichtredundante und vorzugsweise sortierte Liste von Datenwerten verstanden, die kein semantisches Konzept repräsentiert und Datenwerte enthält, welchen beim Import kein semantisches Konzept zugewiesen wurde. Die Objekt-IDs, die in der konzeptfreien Liste einem bestimmten Datenwert bzw. Listenelement zugewiesen sind, umfassen nur Objekt-IDs von Datenobjekten, die diesen Datenwert bzw. Listenelement enthielten und denen beim Import kein semantisches Konzept zugewiesen werden konnte.

Unter einer **"globalen Liste"** wird hier eine nichtredundante und vorzugsweise sortierte Liste von Datenwerten verstanden, in welcher jedem Datenwert in der globalen Liste ein oder mehrere Zeiger zugewiesen sind, wobei jeder der Zeiger auf ein Element einer der Konzeptlisten oder ein Element der konzeptfreien Liste verweist, welches einen zu diesem Datenwert der globalen Liste identischen Datenwert beinhaltet.

Unter einem **"semantischen Konzept"** wird hier ein Bedeutungsinhalt verstanden, der in verschiedenen konkreten Verkörperungen realisiert sein kann. Beispielsweise kann ein semantisches Konzept eine Klasse von Objekten oder Prozessen bezeichnen, die mehrere Elemente umfasst. Je nach Art der Rohdaten und/oder der verwendeten Parser können den geparsten und importierten Datenwerten eine Vielzahl unterschiedlicher Konzepte zugewiesen sein. Bei medizinischen Daten kann ein semantisches Konzept z.B. eine Diagnose sein, die verschiedene konkrete Verkörperungen (Datenwerte) wie z.B. "Diabetes", "Parkinson", oder "Hautkrebs" umfasst. Ein anderes semantisches Konzept könnte "Symptom" sein und Verkörperungen bzw. Datenwerte wie "Fieber", "Schüttelfrost", "Zahnschmerzen" umfasst.

Unter dem **"Import"** von Parsingergebnissen durch das DVS-System wird hier der Vorgang des Empfangs von Parsingergebnissen von einem oder mehreren DVS-System-externen Parsern durch das DVS-System verstanden. Falls einer oder mehrere der Parser interne Komponenten des DVS-Systems sind, ist der Import der Transfer der Parsingergebnisse von diesem oder diesen Parsern an die zur Speicherung der Ergebnisse in Form der redundanzfreien Listen zuständigen Module des DVS-Systems.

Unter einem **"Computersystem"** wird hier ein monolithisches oder verteiltes Datenverarbeitungssystem, insbesondere ein digitales Datenverarbeitungssystem verstanden. Das Datenverarbeitungssystem kann also z.B. aus einem StandaloneComputersystem oder einem Rechnernetzwerk, insbesondere einem Cloudsystem, bestehen. Das Computersystem kann z.B. auch als mobiles Datenverarbeitungssystem, z.B. als Notebook, Tablet-Computer oder portables Telekommunikationsgerät, z.B. ein Smartphone, ausgebildet sein.

Unter einem **"System"** ist hier eine Gesamtheit aus ein oder mehreren Elementen zu verstehen, die in der Lage ist, Daten zu verarbeiten. Hierfür tauschen die Systemkomponenten Daten und/oder Steuerbefehle aus. Beispielsweise kann ein System einen Computer mit einem DVS-System umfassen. Optional kann das System weitere Komponenten umfassen, z.B. ein oder mehrere Client-Computersysteme, die Suchanfragen und/oder Analyseanfragen an das DVS-System senden, und/oder Quellsysteme, die jeweils einige der Rohdaten beinhalten, die vom DVS-System und den Parsern in die nicht-redundanten Datenwertlisten transformiert wird.

### Kurze Beschreibung der Zeichnung

Nachfolgend werden Ausführungsformen der Erfindung mit Bezug auf die Zeichnung beschrieben. In der Zeichnung zeigt
- Fig. 1: ein Blockdiagramm eines Systems mit einem DVS-System;
- Fig. 2: ein Flussdiagramm eines Verfahrens zur Speicherung von Daten;
- Fig. 3: eine Vielzahl von Datenstrukturen mit Rohdaten unterschiedlicher Struktur und unterschiedlichen Inhalts;
- Fig. 4: ein Bockdiagramm einer Auswahl einiger der vom DVS-System erzeugten Listen;
- Fig. 5: ein verteiltes Computersystem mit DVS-System-Clients;
- Fig. 6: einen Screenshot einer GUI eines DVS-Systems mit Suchergebnisse für einen regulären Ausdruck;
- Fig. 7: einen Screenshot einer GUI eines DVS-Systems mit verschiedenen Suchoptionen; und
- Fig. 8: einen Screenshot einer GUI eines DVS-Systems, wobei die GUI den Inhalt der Konzeptlisten zusammenfasst.

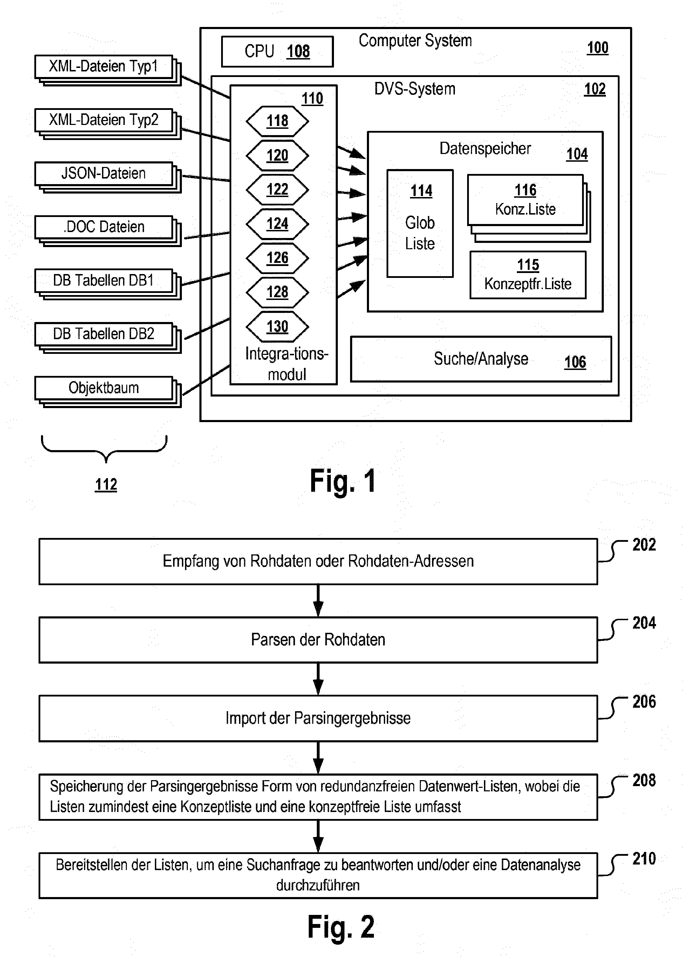

**Figur** 1 zeigt ein Blockdiagramm eines Systems 100 mit einem DVS-System 102 gemäß einer Ausführungsform der Erfindung.

Beispielsweise kann das Verfahren zur Speicherung und zum Durchsuchen von Daten, wie es in dem Flussdiagramm der Figur 2 beschrieben ist, von einem System 100 wie in Figur 1 gezeigt ausgeführt werden. Im Folgenden werden daher das System 100 und das Verfahren der Figur 2 gemeinsam unter Bezugnahme auf die beiden Figuren beschrieben.

Beispielsweise kann das System und Verfahren dazu verwendet werden, eine große Menge an heterogen strukturierten Rohdaten 112 zu integrieren und auf effiziente und flexibel erweiterbare Weise durchsuchbar und analysierbar zu machen. Beispielsweise können die Rohdaten XML Dateien verschiedenen Inhalts und verschiedener Strukturierung, JSON Dateien, Textdateien in verschiedenen Formaten (zum Beispiel Microsoft Word, OpenOffice, Adobe Acrobat PDF-Dateien, TXT Dateien etc.), verschiedene Tabellen von ein oder mehreren unterschiedlichen relationalen Datenbanken, Mediendaten oder hierarchisch organisierte Daten, zum Beispiel Objektbäume, umfassen. In manchen Ausführungsformen können die Rohdaten auch über ein Userinterface des DVS-Systems eingegeben werden. Typischerweise stammen die Rohdaten von mehreren voneinander unabhängigen Datenquellen, zum Beispiel von verschiedenen Organisationen, insbesondere Firmen, Instituten und Behörden. In manchen Rohdaten können Datenobjekte, deren Datenwerte und optional auch deren semantische Bedeutung mehr oder weniger explizit ausgewiesen sein, zum Beispiel in Datenbanktabellen, Excel Dateien und sonstigen vergleichsweise stark strukturierten Daten mit entsprechenden Feldern. In anderen Rohdaten (zum Beispiel Bilddaten) können die Datenobjekte und deren Datenwerte nicht explizit, sondern implizit vorliegen. Das heißt, die Datenobjekte und ihre Datenwerte werden erst im Zuge des Parsingvorganges als solche erkannt und extrahiert.

Um die verschiedenen Rohdaten zu parsen werden mehrere verschiedene syntaktische und/oder semantische Parser 118-130 bereitgestellt. Beispielsweise können die Parser Bestandteil eines Integrationsmoduls 110 des DVS Systems 102 sein. Es ist auch möglich, dass die Parser externe Komponenten sind, deren Ausführung durch das DVS-System veranlasst und kontrolliert wird. Um die Rohdaten parsen zu können, benötigten die verwendeten Parser 118-130 zumindest Lesezugriff auf die jeweiligen Rohdaten. Die Parser sind während des Parsens vorzugsweise in Austausch mit dem DVS-System bzw. anderen Komponenten des DVS-Systems, z.B. um beim dynamischen Erstellen einer Objekt-ID für ein Datenobjekt feststellen zu können, ob diese ID wirklich eindeutig ist oder bereits durch eine Objekt-ID belegt ist, die in einer der Datenwert-Listen als Referenz verwendet wird.

In einem ersten Schritt 202 empfängt das DVS-System 102 und/oder die von ihm kontrollierten Parser die Rohdaten 112 oder zumindest Zugriffsadressen auf diese Rohdaten. Die Zugriffsadressen erlauben zumindest einen Lesezugriff auf die Rohdaten. Beispielsweise können die Rohdaten in ein oder mehreren über ein Netzwerk verbundenen Quellsystemen erzeugt oder erfasst worden sein, und über ein Netzwerk, zum Beispiel das Internet, an das Computersystem 100 übermittelt werden. In manchen Ausführungsformen werden der Rohdaten in Kopie durch das DVS-System gespeichert, zum Beispiel zum Zwecke einer späteren erneuten Verarbeitung durch zusätzliche und/oder verbesserte Versionen existierender Parser. Die Rohdaten werden jedoch nicht direkt zur Beantwortung von Suchanfragen verarbeitet.

Das Parsen und der Import der verschiedenen Rohdaten können parallel erfolgen, es ist aber auch möglich, dass die verschiedenen Rohdaten nacheinander und sogar in großem zeitlichen Abstand verarbeitet werden, je nach Verfügbarkeit der Rohdaten und/oder der zum Parsen verwendeten Parser.

In Schritt 204 werden die Rohdaten von einer Vielzahl von Parsern 118-130 verarbeitet, um Datenobjekte, deren Objekt IDs und ein oder mehrere Datenwerte, die in jedem der Datenobjekte enthalten sind, zu extrahieren. Beispielsweise kann es verschiedene Parser für Excel-Dateien, Textdateien, Bilddateien, verschiedene XML-Dateien und Datenbanktabellen geben. Bei den Objekt-IDs kann es sich um Identifikatoren von Datenobjekten handeln, die bereits von den Rohdaten vorgegeben werden, und die vom DVS-System als Objekt-IDs übernommen werden. Alternativ dazu können die Objekt-IDs auch erst während des Parsens erzeugt werden. Beispielsweise können in einer Exceltabelle mehrere Datensätze zeilenweise gespeichert sein. Ein Parser dieser Excel Tabelle kann dazu konfiguriert sein, jede Zeile der Exceldatei als Datenobjekt zu interpretieren und die Kombination aus Dateiname und Zeilennummer der Zeile, in welchen der Datensatz/das Datenobjekt enthalten ist, zu verwenden. Falls den extrahierten Datenwerten bereits in den Rohdaten stimmte semantische Konzepte explizit zugewiesen sind (zum Beispiel durch entsprechende Feld- oder Spaltenbezeichner), weist der jeweils zuständige Parser den extrahierten Datenwerten das semantische Konzept zu, das der extrahierte Datenwert verkörpert. Dadurch, dass der Parser bestimmte Feldbezeichner als semantisches Konzept verwendet und das DVS-System automatisch entsprechende Konzeptlisten erzeugt, falls das Konzept noch nicht in Form einer Konzeptliste im Datenspeicher vorhanden ist, lernt das DVS-System automatisch neue semantische Konzepte. Die beim Parsen aus den Rohdaten extrahierten Datenwerte werden entsprechend des ihnen durch die Feldbezeichner zugewiesenen semantischen Konzepts in den Konzeptlisten gespeichert. Es ist aber auch möglich, dass ein Parser erst in einem komplexen Parsingprozess Datenobjekte und Datenwerte erkennt, die nicht explizit in den Rohdaten enthalten sind. Ebenso ist es möglich, dass ein Parser nicht erkennt, welchem semantischen Konzept ein extrahierte Datenwert angehört. Nach Durchführung des Parsing-Schrittes können die Ergebnisse also in Form von (zunächst möglicherweise Redundanzen) Datenwertlisten, deren Elemente jeweils mit einer Objekt ID verknüpft sind und denen optional auch ein semantisches Konzept zugewiesen ist, vorliegen.

In Schritt 206 importiert das DVS System, zum Beispiel über ein Integrationsmodul 110, die Ergebnisse des Parsingvorganges und speichert die Ergebnisse in Form von nicht-redundanten Datenwertlisten 114, 115, 116 in einem von dem DVS-System verwalteten Datenspeicher oder Datenspeicherbereich 104.

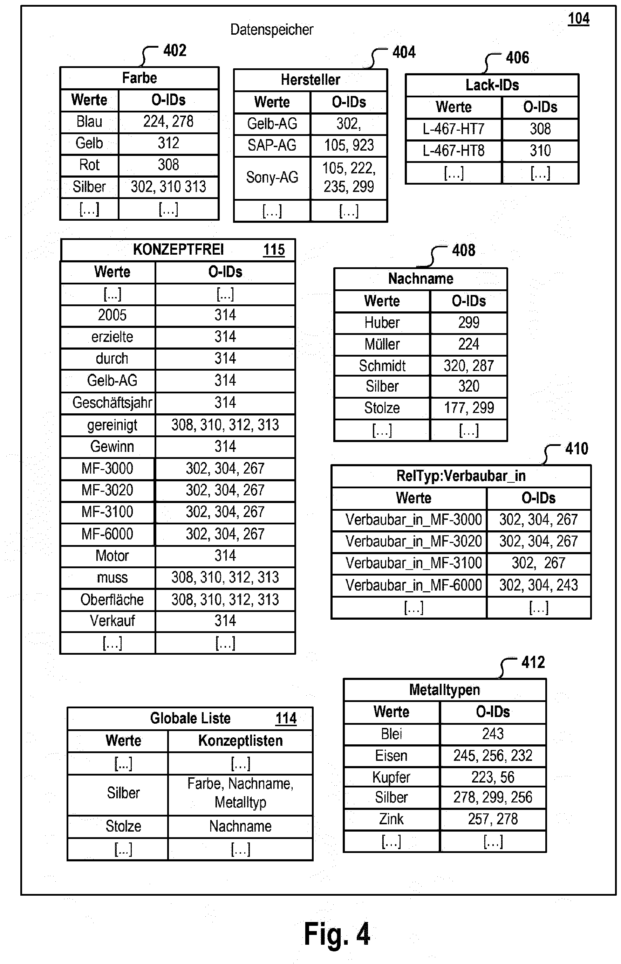

Diese Listen umfassen ein oder mehrere Konzeptlisten 116, typischerweise eine konzeptfreie Liste und optional zudem eine globale Liste 115. Vorzugsweise sind die Datenwerte innerhalb einer Liste nach einer bestimmten Ordnungsrelation sortiert, also zum Beispiel alphabetisch geordnet. Funktion und Struktur der Listen sind mit Referenz auf Figur 4 näher beschrieben. Durch diese Form der Speicherung löst sich die Objektstruktur, also die Frage, welche Datenwerte bzw. semantischen Konzepte in einen bestimmten Datenobjekt vorhanden sind, gewissermaßen auf. Somit kann die Datenmenge sehr stark komprimiert und jederzeit ohne strukturelle Änderungen um weitere Datenwerte und/oder Konzepte erweitert werden, die in Form von zusätzlichen Rohdaten und/oder zusätzlichen Parsern bereitgestellt wurden.

In Schritt 210 stellt das DVS-System die redundanzfreien Listen 114, 115, 116, bereit, um auf Basis dieser Listen eine Suchanfrage zu beantworten und/oder Analysen auf den in den Listen enthaltenen Datenwerten durchzuführen. Beispielsweise kann das DVS-System, das die Listen erstellt hat, ein Modul 106 zum Empfangen und zur Bearbeitung von Suchanfragen und/oder ein Modul zur Durchführung der Analysen beinhalten. Das Modul 106 kann zum Beispiel dazu konfiguriert sein, Suchanfragen über eine Netzwerkschnittstelle von ein oder mehreren Client-Computern zu empfangen oder über eine GUI direkt von einem lokal arbeitenden Nutzer. Zusätzlich oder alternativ dazu kann das Modul 106 auch eine Vielzahl von komplexen Analysefunktionen enthalten, die auf Mengenoperationen auf mehreren Konzeptlisten und optional auch der konzeptfreien Liste und der globalen Liste beruhen.

In anderen Ausführungsformen ist es auch möglich, dass das DVS-System, das die Listen 114, 115, 116 erstellt hat, die Listen 114, 115, 116 im Original oder in Kopie an ein Such- und Analysesystem überträgt. Bei dem Such- oder Analysesystem kann es sich um eine weitere Instanz eines DVS-Systems handeln, oder um ein sonstiges Hardware- und/oder Software-basiertes Datenverarbeitungssystem mit einer Schnittstelle zum Empfang und zur Verarbeitung von Suchanfragen und/oder Analysekommandos. Dieses sonstige Such- und Analysesystem kann optional auch Parser und eine Schnittstelle zum Import von Parsingergebnissen beinhalten, muss diese Komponenten jedoch nicht beinhalten.

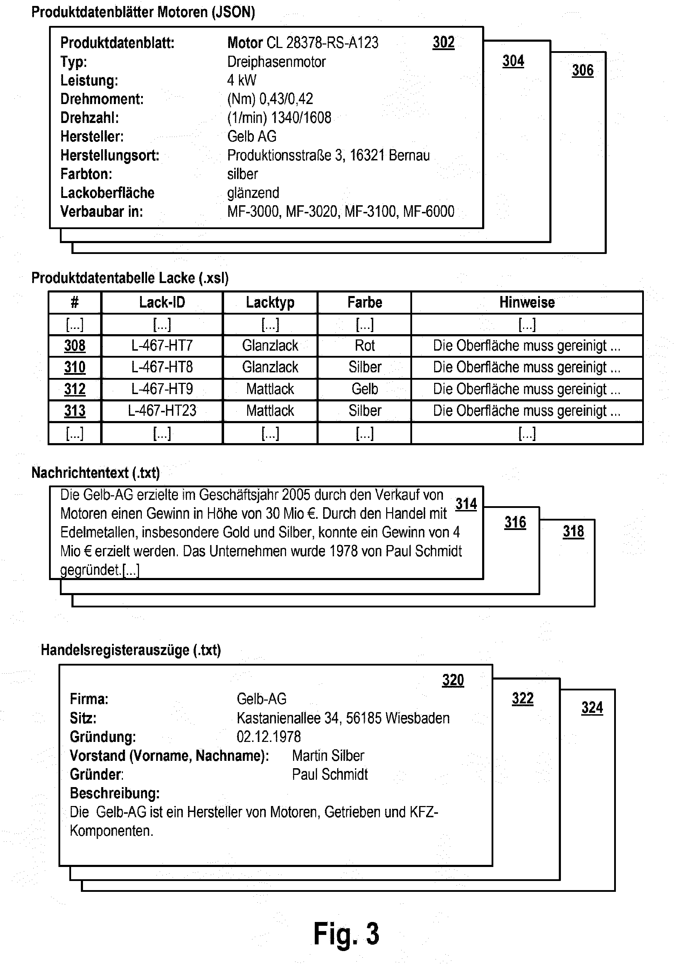

**Figur 3** zeigt Datenstrukturen mit Rohdaten, wobei die Datenstrukturen eine unterschiedliche Struktur und unterschiedlichen Inhalt aufweisen.

Beispielsweise sind die Datenstrukturen 302, 304 und 306 Produktdatenblätter von Motoren eines Herstellers im JSON Format (aus Platzgründen hier dargestellt als Tabulator-getrennte Textdatei). Beispielsweise kann der Parsingprozess so erfolgen, dass jede einzelne der drei JSON Dateien 302,304 und 306 als eigenes Datenobjekt mit je einer Objekt ID interpretiert wird. Jedes Datenobjekt enthält mehrere Schlüssel-Wert-Felder wie zum Beispiel einen konkreten Datenwert für das semantische Konzept "Leistung", einen konkreten Datenwert für das semantische Konzept "Drehmoment" usw.

Bei der darunter dargestellten Datenstruktur handelt es sich um eine Exceltabelle mit einer Spezifizierung verschiedener Eigenschaften von Lacken eines Lackhändlers. In jeder Zeile 308-313 ist genau ein Datenobjekt (Datensatz) enthalten. Beim Parsingprozess kann jedem erkannten Datenobjekt beispielsweise die Zeilennummer in Kombination mit einem Identifikator dieser Exceltabelle als Objekt-ID zugewiesen werden.

Ein Teil der Rohdaten kann in Form von Textdaten, zum Beispiel Textdateien 314-318, vorliegen. Beispielsweise könnte ein rein syntaktischer Parser zur Zerlegung dieses Textes in einzelne Wörter (die jeweils als Datenwert fungieren) verwendet werden. Beispielsweise kann der syntaktische Parser ein Tokenisierer sein, der natürlichsprachige Texte in Wörter zerlegt, die (abgesehen ggf. von einigen Stopwörtern) als Datenwerte verwendet. In diesem Fall ist den Wörtern/Datenwerten beim Import zunächst kein semantisches Konzept zugewiesen und die Wörter und die Objekt-ID des jeweiligen Herkunftsobjekts werden in die konzeptfreie Liste gespeichert, wobei jedes Wort nur einmal in dieser Liste vorkommt.

Ein weiterer Teil der Rohdaten kann z.B. in Form von Handelsregisterauszügen 320-324 bereitgestellt werden. Diese können eine Mischung aus Schlüssel-Wert-Feldern und Freitext beinhalten.

Die Rohdaten stammen aus unterschiedlichen Quellen, haben aber teils inhaltliche Überschneidungen ("Gelb-AG"), teils mehrdeutige Datenwerte ("Silber"). Ausführungsformen erlauben dennoch eine effiziente Integration und Verarbeitung all dieser Daten unter Auflösung semantischer Ambiguitäten.

**Figur 4** zeigt ein Bockdiagramm einer Auswahl einiger der vom DVS-System auf Basis der in Figur 3 dargestellten Rohdaten erzeugten Datenstrukturen. Die in den redundanzfreien Listen 114, 115, 116 gezeigten Datenwerte sind ebenfalls nur eine Auswahl, typischerweise sind die Listen erheblich länger.

Sämtliche vom DVS System erzeugten und verwalteten Datenwert-Listen 114, 115, 116 sind redundanzfrei, d. h., sie enthalten jeden Datenwert nur einmal. Vorzugsweise sind die Datenwerte außerdem sortiert, sodass eine sequenzielle Suche in den Listen abgebrochen werden kann, wenn auf Basis der ein Sortierung des Suchbegriffs in der Ordnung und der bereits durchsuchten Datenwerte der Liste ausgeschlossen ist, dass eine weitere Suche in der Liste einen Treffer ergibt.

Beispielsweise wurden von den Parsern beim Verarbeiten der Rohdaten unter anderem folgende semantische Konzepte ermittelt: Farbe, Hersteller, Lack-ID, Nachnahme, Relations-Typen und Metalltypen. Diese semantischen Konzepte sind jeweils durch die Konzeptlisten 402,4 404, 406, 408, 410, und 412 repräsentiert.

In der konzeptfreien Liste 115 sind Datenwerte enthalten, welchen beim Parsen kein semantisches Konzept zugeordnet werden konnte. Falls beispielsweise der Parser des Nachrichtentextes 314 ein reiner Tokenisierer eines Textes in Wörter ist, der die Bedeutung der Wörter nicht erkennt, so sind die von diesem Parser ermittelten Wörter "konzeptfrei" und werden in nicht-redundanter Form in der Konzeptliste gespeichert. Falls also in dem Text 314 eine "Gelb-AG" erwähnt wird, ohne dass der verwendete Parser die semantische Bedeutung dieses Begriffes erkennt, so wird dieser Datenwert in der konzeptfreien Liste gespeichert, wobei auf das Datenobjekt 314 referenziert wird. Es ist möglich, dass der gleiche Datenwert "Gelb-AG" auch in anderen Rohdaten enthalten ist, wobei es beim Parsen dieser anderen Rohdaten möglich ist, diesem Datenwert ein semantisches Konzept zuzuweisen. Beispielsweise ist der Datenwert "Gelb-AG" auch in dem Handelsregisterauszug 320 enthalten unter den Feldbezeichner "Firma". Beispielsweise kann der Handelsregister-Parser und/oder das DVS System dazu konfiguriert sein, die semantischen Konzepte "Firma" und "Hersteller" als Synonyme des gleichen semantischen Konzepts zu betrachten, sodass der Datenwert "Gelb-AG" in die Konzeptliste 404 für das Konzept "Hersteller" verknüpft mit der Objekt-ID auf Datenobjekt 302 gespeichert wird. Falls ein Datenwert bereits in der Liste vorhanden ist, wird lediglich die Menge der diesem Datenwert zugewiesenen Objekt-IDs entsprechend ergänzt.

Anhand der konzeptfreien Liste 115 sowie einigen anderen in Figur 3 dargestellten Listen ist ersichtlich, dass die Listendatenwerte von verschiedenen Datenobjekten sortiert sind und dass die Sortierung der Datenwerte in den Listen unabhängig von der Herkunft der Datenwerte von bestimmten Datenobjekten erfolgt. Somit wurde die ursprüngliche Struktur der Datenobjekte in den Rohdaten bei der Erzeugung der Listen in struktureller Hinsicht völlig aufgelöst, denn die Zuweisung von Datenwerten zu den Datenobjekten ist ausschließlich noch in Form der Objekt IDs vorhanden und rekonstruierbar.

Optional können in manchen Ausführungsformen auch Positionsdaten von Datenwerten innerhalb des jeweiligen Datenobjekts mit den Objekt-IDs in den Listen 115-116 gespeichert sein, sodass auch die Position der Datenwerte innerhalb der Datenobjekte in den Rohdaten rekonstruiert werden kann.

Die redundanzfreien Datenwert-listen umfassen vorzugsweise auch eine globale Liste 114. Diese enthält keine Objekt-IDs und dient dazu, Datenwerte einem oder mehreren semantischen Konzepten und den entsprechenden Konzeptlisten zuzuordnen. Beispielsweise ist der Datenwert "Silber" in der globalen Liste den Konzeptlisten "Farbe, "Nachname" und "Metalltyp" zugewiesen, wohingegen der Datenwert "Stolze" lediglich der Konzeptliste "Nachname" zugewiesen ist. Beispielsweise kann die globale Liste dazu dienen, verschiedene semantische Konzepte, die einen bestimmten Suchbegriff beinhalten, bei der Eingabe des Suchbegriffes dynamisch anzuzeigen und/oder dazu dienen, die bei einer Datenbanksuche oder Datenanalyse ausgewerteten Datenwerte auf diejenigen Datenwerte zu beschränken, die ein bestimmtes semantisches Konzept repräsentieren.

Vorzugsweise umfassen die Listen auch ein oder mehrere Konzeptlisten 410, die Relationen von Datenobjekten repräsentieren. Hierbei besteht der Datenwert aus einer Konkatenation des Relationstyps (zum Beispiel "Verbaubar in") und einer Objekt ID (zum Beispiel Identifikatoren von Motortypen MF-3000, ..., MF6000). Die Relation spezifiziert, in welchen Motortyp eine bestimmte Komponente (die in einem Datenobjekt spezifiziert wird, aus welchem beim Parsen diese Relation extrahiert wurde) verbaut werden kann. Eine Suchanfrage mit dem Suchwert "Verbaubar_in_MF_3100" liefert nun in kürzester Zeit sämtliche Objekt-IDs von Datenobjekten, die Motorkomponenten repräsentieren, die in den Motor des Typs MF_3100 verbaut werden können. Somit wird eine höchst effiziente Suchmöglichkeit für alle möglichen Relationstypen von Objekten bereitgestellt, die auch von Datenverarbeitungsgeräten mit wenig Arbeitsspeicher und/oder Rechenkapazität verwendet werden kann.

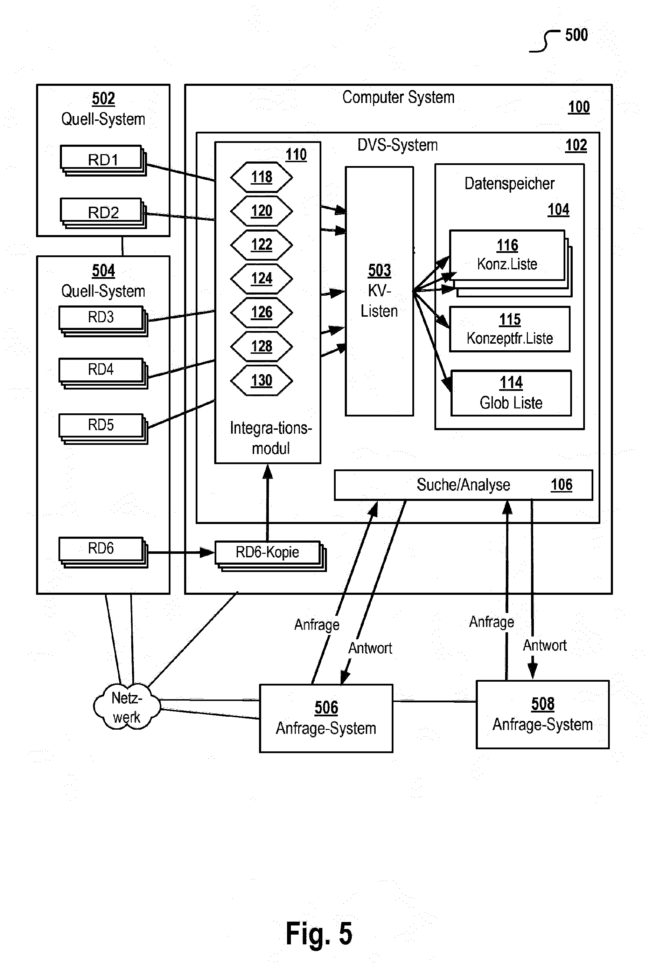

**Figur 5** zeigt ein verteiltes Computersystem 500 mit DVS-System-Clients 506, 508, welche über ein Netzwerk Suchanfragen und/oder Analyseanfragen an eine Schnittstelle 106 des DVS-Systems 102 senden und in Antwort darauf eine Antwort erhalten, zum Beispiel eine Liste mit Objekten, deren Datenwerte die übermittelten Suchkriterien erfüllen.

Die Rohdaten werden von mehreren Quell-Systemen 502, 504 ebenfalls über ein Netzwerk, zum Beispiel das Internet, bereitgestellt.

Die in Figur 5 gezeigte Systemarchitektur 500 ist jedoch nur eine von vielen möglichen. Viele alternative Architekturen sind möglich, zum Beispiel die Speicherung der Rohdaten in Kopie auf dem gleichen Computersystem 100 wie das DVS-System und/oder die Verwendung ein oder mehrerer lokaler Client-Anfrageanwendungen, die ebenfalls auf dem Computersystem 100 instanziiert sind, zusätzlich oder alternativ zu den über das Netzwerk verbundenen Clientsystemen 506, 508. Die Parser 118-130 können integraler Bestandteil des DVS-Systems sein oder externe Softwareprogramme, die von dem DVS-System gesteuert werden.

Beispielsweise können die Parser 118-130 aus den extrahierten Informationen zunächst Schlüssel-Wert Listen (Key-Value (KV)-Listen) erzeugen, die die Datenwerte noch in redundanter Form enthalten z.B. Farbe=grün, Gewicht=1 00kg, Musik Genre=Klassik, Buch=Wissenschaft etc.). Zusätzlich oder alternativ dazu können die KV-Listen über eine GUI des DV-Systems empfangen werden, sodass der Parsingprozess in diesem Fall lediglich darin besteht, die vorgegebenen Schlüssel-Wert Paare zu übernehmen und mit den Objekt-IDs der Datenobjekte, denen die Schlüssel-Wert-Paare entnommen sind, zu verbinden. Beispielsweise kann die GUI es einem Arzt erlauben, eine Diagnose auf Basis mehrerer Symptome einzugeben. Der "Fall" kann als zusammenhängender Datensatz (Datenobjekt) eingegeben werden, wobei die Schlüsselwertpaare "Symptom=hoher Blutzuckerspiegel", "Symptom=geringe Insulinkonzentration", 'Symptom=Schwindel") sowie "Diagnose=Diabetes" in die Konzeptlisten "Symptom" bzw. "Diagnose" gespeichert werden und über die Objekt-ID dieses "Falles" in einer Suchanfrage dem gleichen Fall zugeordnet werden können.

Neben der Rekonstruktion der Datenwerte eines bestimmten Falls/Patienten können jedoch auch umfassende statistische Analysen auf Datenwertlisten durchgeführt werden, die die Symptome und Diagnosen hunderttausender Patienten umfassen.

Somit können mittels effizienter Korrelationsanalysen auf den redundanzfreien Listen, die z.B. mittels Schnittmengenbildung der Objekt-IDs von Datenwerten mehrerer Konzeptlisten durchgeführt werden, neue medizinische Erkenntnisse gewonnen werden.

Alle von den Parsern 118-130 erzeugten Schlüssel-Wert Paare 503 werden vorzugsweise automatisch, standardisiert und immer gleich verarbeitet und in die redundanzfreien Datenwertlisten 114, 115, 116 überführt. Änderungen der Listenstruktur oder irgendwelcher Indizes (beides muss in herkömmlichen DBMS in der Regel bei der Integration weiterer Daten bzw. neuer Datensätze mit bisher unbekannter Struktur angepasst werden) sind nicht erforderlich.

Die Gesamtheit der Datenwertlisten stellt also ein mehrdimensionales Modell dar, in dem keine Datensätze als eigene, auch strukturell von anderen Datensätzen abgegrenzte Einheit existieren. Die Zugehörigkeit von Datenwerten zu bestimmten Datenobjekten wird ausschließlich durch Suche in den redundanzfreien Listen und/oder über Mengenoperationen auf den Objekt-IDs von Elementen dieser Listen berechnet.

Beispielsweise kann eine Suchanfrage folgende Suchkriterien bezüglich Einträgen in einem Telefonbuch enthalten: "Vorname= /[CK].*ristin/", "Straße="/.*[Aa]llee.*/" und

"Hausnummer =/14/". Die Suchanfrage enthält also zwei reguläre Ausdrücke als Suchkriterium, die "fuzzy Matches" zulassen, sowie einen Datenwert "14", der exakt erfüllt sein muss. Das DVS-System ist dazu konfiguriert, diejenigen Konzeptlisten zu identifizieren, auf die die Suchkriterien der Suchanfrage anzuwenden sind (hier also Vorname, Straße und Hausnummer) und dann, je nach Art des Kriteriums, eine fuzzy-Suche oder eine Suche nach identischen Werten in den Datenwerten der jeweiligen Konzeptlisten durchzuführen. Eine derartige Suche ist nicht nur sehr schnell, sondern hat auch den Vorteil, dass Tippfehler oder Schreibvarianten im Namen nicht dazu führen, dass der Telefonbucheintrag (Datenobjekt), der die Suchkriterien erfüllt, übersehen wird, sofern der Tippfehler noch von den regulären Ausdrücken umfasst ist.

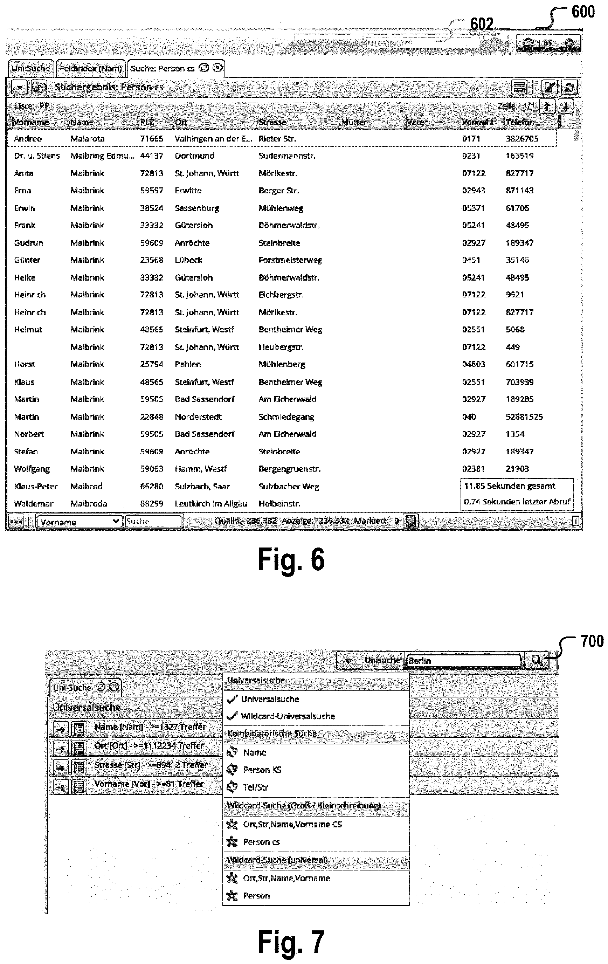

**Figur 6** zeigt einen Screenshot einer GUI 600 eines DVS-Systems mit Suchergebnisse für einen regulären Ausdruck gemäß einer Ausführungsform.

In dem hier gezeigten Beispiel wurde ein Rohdatensatz der Größe 8,9 Gigabyte geparst und in nichtredundante Listen der Größe 4,42 Gigabyte überführt. Der Rohdatensatz bestand aus einem Satz kommaseparierter Dateien, welche jeweils eine Vielzahl von Telefondatensätzen umfasste, wobei die Spalten jeweils unterschiedliche semantische Konzepte wie Name, Vorname, Straße, Hausnummer, PLZ, Ort, Vorwahl und Telefonnummer beinhalteten. Diese Daten wurden, wie bereits für Ausführungsformen beschrieben, in eine globale Liste und die folgenden Konzeptlisten überführt, die jeweils nur nichtredundante Datenwerte enthalten: Vorname, Name, PLZ, Ort, Straße, Vorwahl und Telefon. Außerdem wurde für einige der Datensätze (Datenobjekte) Relationen zu anderen Datenobjekten (Datensätzen) definiert, in diesem Fall "Mutter" und "Vater" Relationen.

Die GUI erlaubt es einem Nutzer, verschiedene Suchanfragen zu formulieren, die Suchkriterien bezüglich einer oder mehrerer der Listen beinhalten können und welche in verschiedenen Suchmodi (Identität oder Matching auf einen regulären Ausdruck) verwendet werden können, wobei der Suchmodus für jeden der Konzeptindizes individuell gewählt werden kann.

In dem in Figur 6 gezeigten Beispiel wird in das Suchfeld 602 ein regulärer Ausdruck eingegeben, mit welchem die redundanzfreie Konzeptliste "Name" nach einem regulären Ausdruck durchsucht wird. Alle Datenwerte, die in der Konzeptliste "Name" enthalten sind und mit dem regulären Ausdruck "matchen", sowie die diesen Match-Datenwerten in dieser Konzeptliste zugewiesenen Objekt-IDs werden in einem ersten Schritt ermittelt. Dieser erste Schritt dauert nur 0,7 Sekunden, weil nicht 89 Gigabyte an Rohdaten, sondern nur eine sortierte Namensliste mit 3,2 Millionen unterschiedliche Datenwerten durchsucht werden muss. In einem zweiten Schritt wird auf die Gesamtheit der im ersten Schritt ermittelten Objekt-IDs verwendet, um die Datenobjekte (Datensätze) auszugeben, die eine Person mit einem "matchenden" Nachnamen repräsentieren. Die Ausgabe dieser Datensätze dauert in dem hier gezeigten Beispiel rund 11 Sekunden. Bei diesen Laufzeiten ist zu berücksichtigen, dass sie auf einem MacBook Air Rechner mit 8 GB Ram, Herstellungsjahr 2012 gemessen wurden, auf welchem neben dem DVS-System zur Datensuche auch ein Webserver und diverse weitere Programme lief, wobei die nicht-redundanten Listen auf einem externen, über USB mit dem Notebook verbundenen SSD-Speicher gespeichert sind. Die Suche mit einem regulären Ausdruck verlief also mit einer Laufzeit von weniger als einer Sekunde auf einem mehrere Jahre alten Notebook und nicht auf einem dezidierten Datenbankserver.

Die Verwendung nichtredundanter Datenwertlisten hat also den Vorteil, dass nicht nur eine Identitätssuche, sondern auch Suchen mit regulären Ausdrücken sehr performant durchgeführt werden können. Die spezifische Datenorganisation in Form von nicht-redundanten Datenwertlisten unterstützt jedoch eine Vielzahl weiterer Suchanfragen, von welchen einige in Figur 7 gezeigt sind.

**Figur** 7 zeigt einen Screenshot einer GUI 700 eines DVS-Systems mit verschiedenen Suchoptionen. Der Nutzer hat zum einen die Möglichkeit, eine "globale Suche", hier "Universalsuche" genannt, durchzuführen. Bei der Universalsuche wird ein Suchbegriff für eine Identitätssuche oder ein Suchbegriff in Form eines regulären Ausdrucks eingegeben. Dieser wird dann in der globalen Liste, die die Gesamtheit aller importierten Datenwerte enthält, gesucht. Die globale Liste wird z.B. den Suchbegriff "Berlin" ein einziges mal enthalten, wobei dieser Datenwert in der globalen Liste auf mehrere Konzeptlisten "Name", "Ort", "Strasse" und "Vorname" verweist, in welcher dieser Datenwert 1327 mal bzw. 1112234 mal bzw. 89412 mal bzw. 81 mal vorkommt. In den Konzeptlisten "Hausnummer" und "PLZ" kommt der Datenwert "Berlin" dagegen nicht vor. Die 81 Treffer für den Vornamen "Berlin" können einen Hinweis auf Fehler in den Rohdaten sein, z.B. fehlende oder falsche Trennzeichen, die dazu führen, dass die Feldzuweisung beim Parsen nicht erkannt wurde.

Zusätzlich oder alternativ zu der globalen Suche kann der Nutzer auch beliebige Kombinationssuchen definieren und durchführen. Eine Kombinationssuche erlaubt es dem Nutzer, für jedes semantische Konzept, das in der Suche zu berücksichtigen ist (hier z.B. Name, Personenkürzel und Telefon oder Strasse, ein Suchkriterium einzugeben, wobei vorzugsweise jede Eingabe eines weiteren Buchstaben in jedem beliebigen der Suchkriterien bereits eine Suche für alle bereits (ganz oder teilweise) eingegebenen Suchkriterien auslöst.

Die Laufzeiten auch für mehrere reguläre Ausdrücke auf mehrere der Konzeptlisten liegen je nach Art des Ausdrucks im Bereich weniger Sekunden bis Bruchteile von Sekunden. Bemerkenswert ist, dass kein Index erstellt werden muss und keinerlei Anpassung an die Struktur (oder Indizierung) der Listen vorgenommen werden muss in Abhängigkeit von der Anzahl und Art der semantischen Konzepte, die zur Suche verwendet werden sollen. In vielen herkömmlichen DBMS müsste - zusätzlich zu den relationalen Daten in Tabellenform, deren Umfang in etwa dem der 8,9 GB Rohdaten entspräche, noch eine Vielzahl von Suchindizes zusätzlich zu den Tabellen erstellt werden. Somit liegt der effektive Speicherverbrauch eines herkömmlichen relationalen DBMS, welches die gleiche Vielzahl an Suchanfragen unterstützt, um ein Vielfaches höher als die 4,42 GB, die das DVS-System gemäß der hier beschriebenen Ausführungsform verbraucht, um jegliche kombinatorisch mögliche Suchanfrage auf die globale Liste und/oder die Konzeptliste und/oder die konzeptfreie Liste zu erlauben.

In einem anderen Beispiel wurde ein 550 GB Rohdatensatz, der 1,4 Milliarden Taxifahrten-Datensätze (u.a. mit Zeit und Ortsangaben für Startpunkt und Ziel, Zahl der Gäste und gezahltem Betrag) in eine Menge nicht-redundanter Listen überführt, die insgesamt eine Größe von 396 GB hatten. Die Datensätze (Datenobjekte) der Rohdaten referenzierten jeweils auf eine Taxizone, die als Startzone diente, und auf eine weitere, die als Zielzone diente. Die Laufzeit zur Ermittlung der Gesamtzahl aller Taxifahrten, die eine bestimmte Zone als Startzone oder als Zielzone haben, betrug trotz der immensen Größe des Datenbestands dank der beschriebenen Listenorganisation nur 0,01 Sekunden.

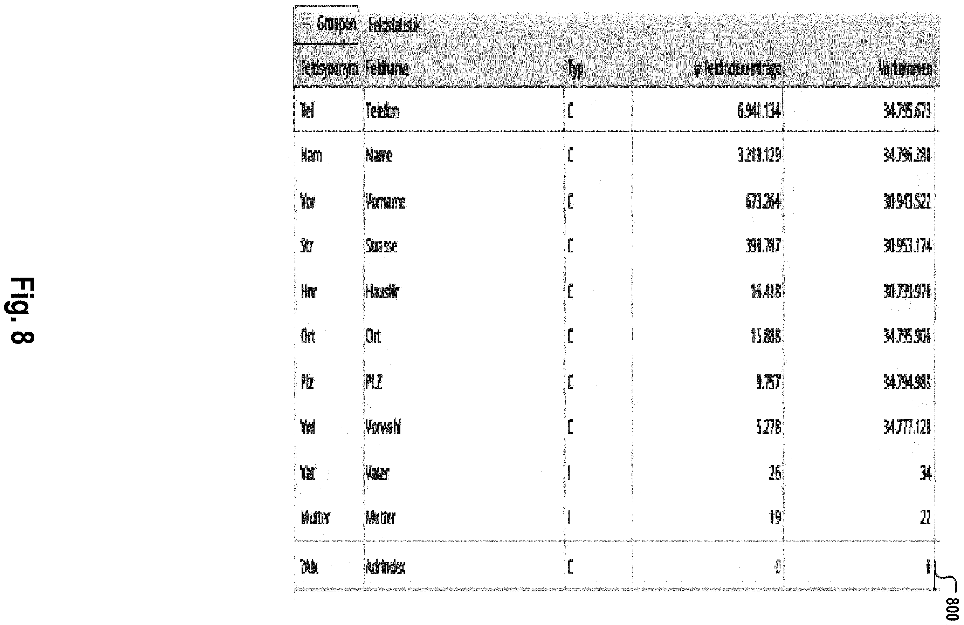

**Figur 8** zeigt einen Screenshot einer GUI 800 eines DVS-Systems, wobei die GUI den Inhalt der Konzeptlisten zusammenfasst. In der Spalte "Feldname" steht der Name der Konzeptlisten, die von dem DVS-System verwaltet und zur Suche verwendet werden. Dieser Name ist identisch zu dem semantischen Konzept, das von dieser Konzeptliste repräsentiert wird. Die Anzahl der unterschiedlichen Datenwerte in der jeweiligen Konzeptliste ist in der Spalte "Feldindexeinträge" dargestellt. In der Konzeptliste "Telefon" kommen 6941134 verschiedene Telefonnummern (ohne Vorwahl) vor. In der Konzeptliste "Name" kommen 3210129 verschiedene Nachnamen vor. In der Konzeptliste "Vorname" kommen 673264 verschiedene Vornahmen vor. Die Gesamtheit der (verschiedenen, also nicht-redundanten) Objekt-IDs, die der Gesamtheit der Datenwerte in den jeweiligen Listen zugewiesen sind, ist in der Spalte "Vorkommen" dargestellt. Somit beinhalten die Rohdaten 34795673 Datenobjekte (Datensätze), die einen Datenwert in dem Feld "Telefon" haben, wobei insgesamt 6941134 unterschiedliche Telefonnummern in der Gesamtheit dieser "Telefonfelder" enthalten sind und extrahiert werden.

## Patentansprüche

1. Verfahren zur Speicherung von Daten (114, 115, 116) in einem Datenspeicher (104), wobei das Verfahren umfasst:
- Empfang (202) von Rohdaten (112) oder von Zugriffsadressen der Rohdaten durch ein Datenverarbeitungs- und Suchsystem - DVS-System (102), wobei die Rohdaten unterschiedliche Strukturen haben;
- Parsen (204) der Rohdaten durch mehrere verschiedene Parser zur Ermittlung von Datenobjekten mit je ein oder mehreren Datenwerten und einer Objekt-ID jedes der Datenobjekte, wobei zumindest einigen der Datenwerte jeweils ein semantisches Konzept zugewiesen wird;
- automatischer Import (206) der Parsingergebnisse durch das DVS-System;
- automatische Speicherung (208) aller Parsingergebnisse in Form von redundanzfreien Datenwert-Listen (114, 115, 116) in dem Datenspeicher durch das DVS-System, wobei die redundanzfreien Listen umfassen:
• ein oder mehrere Konzeptlisten (116), wobei jede der Konzeptlisten jeweils ein semantisches Konzept repräsentiert und eine nichtredundante Liste selektiv diejenigen der importierten Datenwerte beinhaltet, denen beim Parsen das semantische Konzept dieser Konzeptliste zugewiesen wurde, wobei jedem der Datenwerte in der Konzeptliste alle Objekt-IDs derjenigen Datenobjekte zugewiesen sind, die diesen Datenwert beinhalten, wobei der beinhaltete Datenwert eine Repräsentation des semantischen Konzepts dieser Konzeptliste ist;
• eine konzeptfreie Liste (115), wobei die konzeptfreie Liste selektiv diejenigen der importierten Datenwerte beinhaltet, denen beim Parsen kein semantisches Konzept zugewiesen wurde, wobei jedem der Datenwerte in der konzeptfreien Listen alle Objekt-IDs derjenigen Datenobjekte zugewiesen sind, die diesen Datenwert beinhalten, wobei dem beinhalteten Datenwert dieses Datenobjekts beim Parsen kein semantisches Konzept zugewiesen werden konnte; und
- Bereitstellen (210) der redundanzfreien Listen (114, 115, 116) durch das DVS-System, um eine Suchanfrage zu beantworten und/oder eine Datenanalyse durchzuführen, wobei insbesondere die Suchanfrage und/oder die Datenanalyse ohne Zugriff auf die Rohdaten erfolgt.

2. Verfahren nach Anspruch 1, wobei zumindest einige der Rohdaten in Form einer Vielzahl Datenstrukturen vorliegen oder empfangen werden, wobei die Vielzahl von Datenstrukturen insbesondere eine Mischung von zwei oder mehreren der folgenden Datenstrukturen angehören:
- XML-Datei;
- JSON Datei;
- Textdatei;
- CSV-Datei;
- Datenbanktabelle;
- Objektbaum;
- Mediendatei, insbesondere Video-, Audio- und/oder Bilddatei;
- Daten, die über eine GUI empfangen wurden;
- Streaming-Daten.

3. Das Verfahren nach einem der vorigen Ansprüche, wobei die redundanzfreien Listen ferner umfassen:
- eine globale Liste (114), wobei die globale Liste eine redundanzfreie Liste aller importierter Datenwerte ist, wobei jedem Datenwert in der globalen Liste ein oder mehrere Zeiger zugewiesen sind, wobei jeder der Zeiger auf ein Element einer der Konzeptlisten oder ein Element der konzeptfreien Liste verweist, welches einen zu diesem Datenwert identischen Datenwert beinhaltet;
- wobei das DVS-System dazu konfiguriert ist, die Analyse oder die angefragte Suche zumindest auch auf der globalen Liste durchzuführen, wobei die globale Liste zur Erkennung und/oder zur konzeptspezifischen Verarbeitung von Datenwerten dient, die in verschiedenen Datenobjekten unterschiedliche semantische Konzepte repräsentieren.

4. Verfahren nach einem der vorigen Ansprüche,
- wobei zumindest einige der Datenwerte aus Feldern von die Rohdaten beinhaltenden Datenstrukturen extrahiert werden, wobei die Felder durch die Datenstrukturen festgelegt sind, wobei die Felder ein oder mehrere konzeptbezogene Felder und/oder ein oder mehrere konzeptagnostische Felder umfassen, wobei ein konzeptbezogenes Feld ein Feld ist, dem ein Feldbezeichner zugewiesen ist, wobei der Feldbezeichner ein semantisches Konzept repräsentiert; und/oder wobei ein konzeptagnostisches Feld ein Feld ist, das frei ist von einer semantischen Bedeutungszuweisung,
- und/oder wobei zumindest einige der Datenwerte durch semantische Parser importiert werden, die die importierten Datenwerte sowie das diesen zugewiesene semantische Konzept auf Basis einer Datenanalyse erkennen, wobei die Datenanalyse insbesondere eine Bildanalyse, eine Audiosignalanalyse, eine statistische Analyse, ein Klassifikationsverfahren, ein Machine-Learning-Verfahren, und/oder ein Mustererkennungsverfahren ist,
- wobei beispielsweise das DVS-System diejenigen der Datenwerte, die aus den konzeptbezogenen Feldern extrahiert wurden, in derjenigen der Konzeptlisten speichert, die das semantische Konzept des Feldbezeichners dieser konzeptbezogenen Felder repräsentiert; und/oder
- wobei beispielsweise das DVS-System diejenigen der Datenwerte, die aus den konzeptagnostischen Feldern extrahiert wurden, ausschließlich in der konzeptfreien Liste (115) speichert, wenn der verwendete Parser kein semantisches Konzept des Datenwertes erkennt.

5. Verfahren nach einem der vorigen Ansprüche, ferner umfassend:
- Nachdem die Datenwerte importiert und gespeichert sind, Bereitstellung eines weiteren Parsers, der dazu ausgebildet ist, Datenwerte zu erkennen und importieren, die zumindest einem neuen semantischen Konzept zugewiesen sind, wobei ein neues semantisches Konzept ein Konzept ist, das von keinem der aktuell in dem Datenspeicher enthaltenen Konzeptlisten repräsentiert wird;
- Verarbeitung der Rohdaten durch den weiteren Parser, wobei ein oder mehrere neue Datenwerte aus den Rohdaten extrahiert werden, die dem zumindest einen neuen Konzept zugewiesen sind;
- Abgleich des von dem weiteren Parser erkannten zumindest einen neuen semantischen Konzepts mit den Konzeptlisten in dem Datenspeicher durch das DVS-System und automatische Erzeugung und Speicherung einer neuen Konzeptliste für jedes des zumindest einen neuen semantischen Konzepts, für welches der weitere Parser zumindest einen Datenwert extrahiert hat; und
- Automatische Speicherung der von dem weiteren Parser aus den Rohdaten extrahierten Datenwerte in diejenige der zumindest einen neuen Konzeptliste, die das neue semantische Konzept repräsentiert, die der weitere Parser diesem Datenwert zugewiesen hat.

6. Verfahren nach einem der vorigen Ansprüche, ferner umfassend:
- Empfang einer Suchanfrage zur Ermittlung von Datenobjekten, die ein oder mehrere konzeptbezogene Suchkriterien und/oder ein oder mehrere konzeptagnostische Suchkriterien erfüllen, wobei ein konzeptbezogenes Suchkriterium ein Suchkriterium ist, dem ein Identifikator eines semantischen Konzepts zugewiesen ist, wobei ein konzeptagnostisches Suchkriterium ein Suchkriterium ist, dem kein semantisches Konzept zugewiesen ist;
- Durchsuchung der konzeptfreien Liste nach ein oder mehreren Datenwerten, die jedes der empfangenen konzeptagnostischen Suchkriterien erfüllen; und/oder
- Für jedes der empfangenen konzeptbezogenen Suchkriterien, Durchsuchung selektiv derjenigen der Konzeptlisten, die das semantische Konzept dieses Suchkriteriums repräsentiert, nach ein oder mehreren Datenwerten, die das konzeptbezogene Suchkriterium erfüllen;
- Zurückgabe der Objekt-IDs oder einer Untermenge dieser Objekt-IDs, die Datenwerten zugewiesen sind, die bei der Durchsuchung der globalen Liste und/oder der zumindest einen Konzeptliste ermittelt wurden in Antwort an die Suchanfrage durch das DVS-System.

7. Verfahren nach einem der vorigen Ansprüche, wobei das Verwenden der redundanzfreien Listen (114, 115, 116) zur Durchführung der angefragten Suche und/oder der Datenanalyse umfasst:
- Durchführung einer Mengenoperation auf Mengen von Objekt-IDs, die Datenwerten in zwei oder mehr der redundanzfreien Listen zugewiesen sind, wobei die Mengenoperation insbesondere eine Berechnung einer Schnittmenge, einer Vereinigungsmenge, einer Differenzmenge oder einer Symmetrischen Differenzmenge umfasst.

8. Verfahren nach einem der vorigen Ansprüche,
- wobei zumindest einige der Datenobjekte in Relation zu anderen Datenobjekten stehen;
- wobei im Zuge des Parsens der Rohdaten und/oder im Zuge einer später durchgeführten Datenverarbeitungsoperation auf den Rohdaten und/oder den Datenwerten der bereits gespeicherten redundanzfreien Listen das DVS-System eine Extraktion der Objektrelationen dieser Datenobjekte zu anderen Datenobjekten durchführt,
- wobei jede extrahierte Relation eines der Datenobjekte - hier erstes Datenobjekt genannt - zu einem anderen der Datenobjekte hier zweites Datenobjekt genannt - in Form einer Kombination aus einem Relationstyp und der Objekt-ID des zweiten Datenobjekts extrahiert wird, und
- wobei jede der extrahierten Kombinationen als einer der Datenwerte in der konzeptfreien Liste und/oder in der zumindest einen Konzeptliste gespeichert wird, wobei in der konzeptfreien Liste und/oder der zumindest einen Konzeptliste jeder der extrahierten Kombinationen die Objekt-IDs derjenigen der ersten Datenobjekte zugewiesen sind, zu welchem die in der Kombination bezeichnete Relation besteht.

9. Verfahren nach Anspruch 8, ferner umfassend:
- Empfang einer Suchanfrage oder eines Analysekommandos zur Ermittlung aller Datenobjekte, die eine Relation zu einem Suchdatenobjekt haben, wobei die Anfrage oder das Kommando eine Suchobjekt-ID enthält;
- Durchsuchen der globalen Liste (114) um alle Datenwerte zu ermitteln, die aus einer Kombination eines Relationstyps und einer Objekt-ID, die identisch ist zu der Suchobjekt-ID, bestehen;
- Identifikation von ein oder mehreren Konzeptlisten (116), auf welche die in der globalen Liste ermittelten Datenwerte verweisen;
- Durchsuchen der ein oder mehreren identifizierten Konzeptlisten, um Datenwerte zu ermitteln, die aus einer Kombination eines Relationstyps und einer Objekt-ID, die identisch ist zu der Suchobjekt-ID, bestehen;
- Zurückgabe der Objekt-IDs, die den ermittelten Datenwerten in den ein oder mehreren Konzeptlisten zugewiesen sind, also IDs derjenigen Datenobjekte, die eine Relation zu dem Suchobjekt haben.

10. Verfahren nach einem der vorigen Ansprüche, ferner umfassend:
- Bereitstellung einer Mappingtabelle durch das DVS-System, wobei die Mappingtabelle jedem Datenwert in der konzeptfreien Liste und jedem Datenwert der Konzeptlisten je einen oder mehrere Identifikatoren zuweist, wobei die Identifikatoren insbesondere Werte sind, deren Länge und/oder Art in Abhängigkeit von der Prozessorarchitektur des zur Suche und/oder Analyse verwendeten Computersystems abhängt;
- Erzeugen von obfuskierten Kopien der konzeptfreien Liste und jeder der Konzeptlisten durch das DVS-System, wobei in den obfuskierten Kopien die Datenwerte jeweils durch einen diesem Datenwert in der Mappingtabelle zugewiesenen Identifikator ersetzt sind;
- Verwenden der obfuskierten Listen zur Durchführung der Suchanfrage und/oder Analyse durch das DVS-System.

11. Verfahren nach einem der vorigen Ansprüche, ferner umfassend:
- Verschlüsseln der Konzeptlisten und der konzeptfreien Liste durch das DVS-System, oder Verschlüsseln der obfuskierten Konzeptlisten und der obfuskierten konzeptfreien Liste durch das DVS-System;
- In Antwort auf den Empfang der Suchanfrage oder eines Datenanalysekommandos, Identifikation derjenigen der verschlüsselten Listen, die zur Bearbeitung der Suchanfrage oder des Datenanalysekommandos verarbeitet werden müssen;
- Authentifizierung des Absenders der Suchanfrage gegenüber dem DVS-System, wobei das DVS-System für jede der identifizierten Listen individuell prüft, ob der Absender zum Zugriff auf den Inhalt der Liste berechtigt ist;
- Erzeugung entschlüsselter Kopien selektiv derjenigen der identifizierten Listen, für welcher sich der Absender als zugriffsberechtigt authentifiziert hat, durch das DVS-System;
- Durchführung der Suchanfrage oder der Datenanalyse auf den entschlüsselten Listenkopien;
- Nach Durchführung der Suchanfrage oder der Datenanalyse, Löschen der entschlüsselten Listenkopien durch das DVS-System, wobei vorzugsweise das DVS-System für die Verschlüsselung jeder der Listen ein unterschiedlicher Verschlüsselungsschlüssel verwendet.

12. Verfahren nach einem der vorigen Ansprüche,
- wobei zumindest eine der Konzeptlisten genomische Marker mehrerer Individuen einer Spezies oder Sub-Spezies repräsentieren, wobei zumindest eine weitere der Konzeptlisten metabolische oder phänotypische Merkmale dieser Individuen repräsentieren, wobei das DVS-System die Datenanalyse mittels Mengenoperationen auf den Listen durchführt und wobei die Datenanalyse eine Korrelationsanalyse von genomischen Markern einerseits und den metabolischen oder phänotypischen Merkmalen andererseits beinhaltet; oder
- wobei zumindest einige der Datenwerte der globalen Liste und/oder der zumindest einen Konzeptliste eine "ist-Bestandteil-von" Relation zu anderen Objekten einschließlich einer Objekt-ID dieses anderen Objekts spezifizieren, wobei zumindest eine weitere der Konzeptlisten metabolische oder phänotypische Merkmale dieser Individuen repräsentieren, wobei das DVS-System die angefragte Suche durchführt und wobei das Suchkriterium eine Kombination des Relationstyps "ist-Bestandteil-von" und einer Objekt-ID beinhaltet, wobei die Objekt-ID des Suchkriteriums eine Maschine oder ein Fahrzeug oder ein Mehrkomponentenbauteil dieser Maschine oder des Fahrzeugs repräsentiert; oder
- wobei zumindest einige der Datenwerte der globalen Liste und/oder der zumindest einen Konzeptliste Wörter einer natürlichen Sprache sind, wobei das DVS-System die Datenanalyse mittels Mengenoperationen auf den Listen durchführt und wobei die Datenanalyse eine Korrelationsanalyse von Wörtern zur Erstellung eines prädiktiven Modells dieser natürlichen Sprache beinhaltet.

13. Verfahren nach einem der vorigen Ansprüche, wobei die Datenwerte in den redundanzfreien Listen (114, 115, 116) sortiert sind.

14. Flüchtiges oder nicht-flüchtiges Speichermedium, auf welchem computerlesbare Instruktionen gespeichert sind, wobei die Instruktionen dazu ausgebildet sind, einen Prozessor dazu zu veranlassen, ein Verfahren zur Speicherung von Daten in einem Datenspeicher gemäß einem der vorigen Ansprüche auszuführen.

15. Redundanzfreie elektronische Datenwertlisten (114, 115, 116),
- wobei die redundanzfreien Datenwertlisten mehreren Konzeptlisten (116) und eine konzeptfreie Liste (115) umfassen,
- wobei die redundanzfreien Listen Datenwerte und Objekt-IDs von Datenobjekten enthalten, die jeweils ein oder mehrere dieser Datenwerte enthalten;
- wobei jede der Konzeptlisten jeweils ein semantisches Konzept repräsentiert und eine nicht-redundante Liste selektiv diejenigen der Datenwerte beinhaltet, denen das semantische Konzept dieser Konzeptliste zugewiesen ist, wobei jedem der Datenwerte in der Konzeptliste alle Objekt-IDs selektiv derjenigen Datenobjekte zugewiesen sind, die diesen Datenwert beinhalten, wobei der beinhaltete Datenwert eine Repräsentation des semantischen Konzepts dieser Konzeptliste ist;
- wobei die konzeptfreie Liste selektiv diejenigen der Datenwerte beinhaltet, denen kein semantisches Konzept zugewiesen ist, wobei jedem der Datenwerte in der konzeptfreien Listen alle Objekt-IDs selektiv derjenigen Datenobjekte zugewiesen sind, die diesen Datenwert beinhalten, wobei dem beinhalteten Datenwert dieses Datenobjekts kein semantisches Konzept zugewiesen ist.

16. Verwendung der redundanzfreien Datenwertlisten (114, 115, 116) nach Anspruch 15 zur Suche und/oder Analyse der in diesen Listen enthaltenen Datenwerte.

17. Computersystem (100, 500) zur Speicherung von Daten umfassend:
- zumindest ein Prozessor (108);
- einen Datenspeicher (104);
- ein Datenverarbeitungs- und Suchsystem - DVS-System (102), wobei das DVS-System dazu ausgebildet ist, die in dem Datenspeicher (104) gespeicherten Daten (114, 115, 116) zu verwalten und zu durchsuchen, und dazu ausgebildet ist, den zumindest einen Prozessor zur Durchführung eines Verfahrens zu veranlassen umfassend:
• Empfang (202) von Rohdaten (112) oder von Zugriffsadressen der Rohdaten durch ein Datenverarbeitungs- und Suchsystem - DVS-System (102), wobei die Rohdaten unterschiedliche Strukturen haben;
• Parsen (204) der Rohdaten durch mehrere verschiedene Parser zur Ermittlung von Datenobjekten mit je ein oder mehreren Datenwerten und einer Objekt-ID jedes der Datenobjekte, wobei zumindest einigen der Datenwerte jeweils ein semantisches Konzept zugewiesen wird;
• automatischer Import (206) der Parsingergebnisse durch das DVS-System;
• automatische Speicherung (208) aller Parsingergebnisse in Form von redundanzfreien Datenwert-Listen (114, 115, 116) in dem Datenspeicher durch das DVS-System, wobei die redundanzfreien Listen umfassen:
• ein oder mehrere Konzeptlisten (116), wobei jede der Konzeptlisten jeweils ein semantisches Konzept repräsentiert und eine nicht-redundante Liste selektiv diejenigen der importierten Datenwerte beinhaltet, denen beim Parsen das semantische Konzept dieser Konzeptliste zugewiesen wurde, wobei jedem der Datenwerte in der Konzeptliste alle Objekt-IDs derjenigen Datenobjekte zugewiesen sind, die diesen Datenwert beinhalten, wobei der beinhaltete Datenwert eine Repräsentation des semantischen Konzepts dieser Konzeptliste ist;
• eine konzeptfreie Liste (115), wobei die konzeptfreie Liste selektiv diejenigen der importierten Datenwerte beinhaltet, denen beim Parsen kein semantisches Konzept zugewiesen wurde, wobei jedem der Datenwerte in der konzeptfreien Listen alle Objekt-IDs derjenigen Datenobjekte zugewiesen sind, die diesen Datenwert beinhalten, wobei dem beinhalteten Datenwert dieses Datenobjekts beim Parsen kein semantisches Konzept zugewiesen werden konnte; und
• Bereitstellen (210) der redundanzfreien Listen (114, 115, 116) durch das DVS-System, um eine Suchanfrage zu beantworten und/oder eine Datenanalyse durchzuführen.

18. Das Computersystem nach Anspruch 17, wobei der zumindest eine Prozessor eine Arithmetisch-logische Einheit - ALU - enthält, die dazu ausgebildet ist, eine Mengenoperation auf Mengen von Objekt-IDs, die Datenwerten in zwei oder mehr der redundanzfreien Listen zugewiesen sind, auszuführen, wobei die Mengenoperation insbesondere eine Berechnung einer Schnittmenge, einer Vereinigungsmenge, einer Differenzmenge oder einer Symmetrischen Differenzmenge umfasst.

## Claims

1. A method for storing data (114, 115, 116) in a data storage device (104), wherein the method comprises:
- receiving (202) raw data (112) or access addresses for the raw data by a data processing and search system - DPS system (102), wherein the raw data have different structures;
- parsing (204) the raw data by a plurality of different parsers in order to ascertain data objects each having one or more data values, and an object ID of each of the data objects, wherein one semantic concept is assigned to each of at least some of the data values;
- automatically importing (206) the parsing results by the DPS system;
- automatically storing (208) all of the parsing results in the form of redundancy-free data value lists (114, 115, 116) in the data storage device by the DPS system, wherein the redundancy-free lists comprise:
• one or more concept lists (116), wherein each of the concept lists represents a semantic concept, and a non-redundant list selectively includes those of the imported data values to which the semantic concept of this concept list was assigned during parsing, wherein each of the data values in the concept list is assigned all of the object IDs of those data objects that include this data value, wherein the included data value is a representation of the semantic concept of this concept list;
• a concept-free list (115), wherein the concept-free list selectively includes those of the imported data values to which no semantic concept was assigned during parsing, wherein each of the data values in the concept-free list is assigned all object IDs of those data objects that include this data value, wherein no semantic concept could be assigned to the included data value of this data object during parsing; and
- providing (210) the redundancy-free lists (114, 115, 116) by the DPS system in order to respond to a search request and/or to perform a data analysis, wherein in particular the search request and/or the data analysis is performed without access to the raw data.

2. The method according to claim 1, wherein at least some of the raw data are present or received in the form of a plurality of data structures, wherein the plurality of data structures includes in particular a mixture of two or more of the following data structures:
- XML file;
- JSON file;
- text file;
- CSV file;
- database table;
- object tree;
- media file, in particular video, audio and/or image file;
- data received via a GUI;
- streaming data.

3. The method according to any one of the preceding claims, wherein the redundancy-free lists further comprise:
- a global list (114), wherein the global list is a redundancy-free list of all imported data values, wherein each data value in the global list is assigned one or more pointers, wherein each of the pointers points to an element of one of the concept lists or an element of the concept-free list that includes a data value identical to this data value;
- wherein the DPS system is configured to perform the analysis or the requested search at least also on the global list, wherein the global list is used for recognition and/or for concept-specific processing of data values that represent different semantic concepts in various data objects.

4. The method according to any one of the preceding claims,
- wherein at least some of the data values are extracted from fields of data structures that include the raw data, wherein the fields are defined by the data structures, wherein the fields comprise one or more concept-related fields and/or one or more concept-agnostic fields, wherein a concept-related field is a field assigned a field identifier, wherein the field identifier represents a semantic concept; and/or wherein a concept-agnostic field is a field that is free of a semantic meaning assignment,
- and/or wherein at least some of the data values are imported by semantic parsers that recognize the imported data values as well as the semantic concept assigned to them on the basis of a data analysis, wherein the data analysis is in particular an image analysis, an audio signal analysis, a statistical analysis, a classification method, a machine learning method, and/or a pattern recognition method,
- wherein, for example, the DPS system stores those of the data values extracted from the concept-related fields in that one of the concept lists that represents the semantic concept of the field identifier of those concept-related fields; and/or
- wherein, for example, the DPS system stores those of the data values extracted from the concept agnostic fields exclusively in the concept-free list (115) if the parser used does not recognize a semantic concept of the data value.

5. The method according to any one of the preceding claims, further comprising:
- after the data values are imported and stored, providing a further parser which is designed to recognize and import data values assigned to at least one new semantic concept, wherein a new semantic concept is a concept not represented by any of the concept lists currently contained in the data storage device;
- processing the raw data by the further parser, wherein one or more new data values are extracted from the raw data assigned to the at least one new concept;
- comparing the at least one new semantic concept recognized by the further parser with the concept lists in the data storage device by the DPS system and automatically generating and storing a new concept list for each of the at least one new semantic concept for which the further parser has extracted at least one data value; and
- automatically storing the data values extracted from the raw data by the further parser into those of the at least one new concept list representing the new semantic concept that the further parser has assigned to this data value.

6. The method according to any one of the preceding claims, further comprising:
- receiving a search request for ascertaining data objects that satisfy one or more concept-related search criteria and/or one or more concept-agnostic search criteria, wherein a concept-related search criterion is a search criterion to which an identifier of a semantic concept is assigned, wherein a concept-agnostic search criterion is a search criterion to which no semantic concept is assigned;
- searching the concept-free list for one or more data values that satisfy each of the received concept-agnostic search criteria; and/or
- for each of the received concept-related search criteria, searching selectively those of the concept lists representing the semantic concept of this search criterion for one or more data values satisfying the concept-related search criterion;
- returning the object IDs or a subset of these object IDs assigned to data values ascertained during the search of the global list and/or the at least one concept list in response to the search request by the DPS system.

7. The method of any one of the preceding claims, wherein the use of the redundancy-free lists (114, 115, 116) to perform the requested search and/or the data analysis comprises:
- performing a set operation on sets of object IDs assigned to data values in two or more of the redundancy-free lists, wherein the set operation comprises, in particular, a calculation of an intersection set, a union set, a difference set, or a symmetric difference set.

8. The method according to any one of the preceding claims,
- wherein at least some of the data objects are related to other data objects;
- wherein, in the course of parsing the raw data and/or in the course of a data processing operation performed later on the raw data and/or the data values of the already stored redundancy-free lists, the DPS system performs an extraction of the object relations of these data objects to other data objects,
- wherein each extracted relation of one of the data objects - herein called the first data object - to another of the data objects - herein called the second data object - is extracted in the form of a combination of a relation type and the object ID of the second data object, and
- wherein each of the extracted combinations is stored as one of the data values in the concept-free list and/or in the at least one concept list, wherein in the concept-free list and/or the at least one concept list each of the extracted combinations is assigned the object IDs of those of the first data objects to which the relation designated in the combination exists.

9. The method of claim 8, further comprising:
- receiving a search request or an analysis command to ascertain all data objects that have a relation to a search data object, wherein the request or the command contains a search object ID;
- searching the global list (114) to ascertain all data values that consist of a combination of a relation type and an object ID that is identical to the search object ID;
- identifying one or more concept lists (116) referenced by the data values ascertained in the global list;
- searching the one or more identified concept lists to ascertain data values that consist of a combination of a relation type and an object ID that is identical to the search object ID;
- returning the object IDs assigned to the ascertained data values in the one or more concept lists, i.e. IDs of those data objects that have a relation to the search object.

10. The method according to any one of the preceding claims, further comprising:
- providing a mapping table by the DPS system, wherein the mapping table assigns one or more identifiers to each data value in the concept-free list and to each data value of the concept lists, wherein the identifiers are in particular values, the length and/or type of which depends on the processor architecture of the computer system used for searching and/or analysis;
- generating obfuscated copies of the concept-free list and each of the concept lists by the DPS system, wherein in the obfuscated copies the data values are each replaced by an identifier assigned to this data value in the mapping table;
- using the obfuscated lists to perform the search request and/or analysis by the DPS system.

11. The method according to any one of the preceding claims, further comprising:
- encrypting the concept lists and the concept-free list by the DPS system, or encrypting the obfuscated concept lists and the obfuscated concept-free list by the DPS system;
- in response to receiving the search request or a data analysis command, identifying those of the encrypted lists that need to be processed to handle the search request or the data analysis command;
- authenticating the sender of the search request to the DPS system, wherein the DPS system checks individually for each of the identified lists whether the sender is authorized to access the contents of the list;
- generating, by the DPS system, decrypted copies selectively of those of the identified lists for which the sender has authenticated themself as authorized to access;
- performing the search request or the data analysis on the decrypted list copies;
- after performing the search request or the data analysis, deleting the decrypted list copies by the DPS system, wherein preferably the DPS system uses a different encryption key for encrypting each of the lists.

12. The method according to any one of the preceding claims,
- wherein at least one of the concept lists represents genomic markers of a plurality of individuals of a species or sub-species, wherein at least another of the concept lists represents metabolic or phenotypic characteristics of these individuals, wherein the DPS system performs the data analysis by means of set operations on the lists, and wherein the data analysis includes a correlation analysis of genomic markers on the one hand and the metabolic or phenotypic characteristics on the other hand; or
- wherein at least some of the data values of the global list and/or the at least one concept list specify an "is-part-of" relation to other objects including an object ID of this other object, wherein at least another one of the concept lists represents metabolic or phenotypic characteristics of these individuals, wherein the DPS system performs the requested search, and wherein the search criterion includes a combination of the relation type "is-part-of" and an object ID, wherein the object ID of the search criterion represents a machine or a vehicle or a multi-component part of this machine or the vehicle; or
- wherein at least some of the data values of the global list and/or the at least one concept list are words of a natural language, wherein the DPS system performs the data analysis by means of set operations on the lists, and wherein the data analysis includes a correlation analysis of words to create a predictive model of this natural language.

13. The method according to any one of the preceding claims, wherein the data values in the redundancy-free lists (114, 115, 116) are sorted.

14. A volatile or non-volatile storage medium on which computer-readable instructions are stored, wherein the instructions are configured to cause a processor to execute a method for storing data in a data storage device according to any one of the preceding claims.

15. Redundancy-free data value lists (114, 115, 116),
- wherein the redundancy-free data value lists comprise a plurality of concept lists (116) and a concept-free list (115),
- wherein the redundancy-free lists contain data values and object IDs of data objects, each of which contain one or more of these data values;
- wherein each of the concept lists represents a particular semantic concept, and a non-redundant list selectively includes those of the data values to which the semantic concept of this concept list is assigned, wherein each of the data values in the concept list is assigned all of the object IDs selectively of those data objects that include this data value, wherein the included data value is a representation of the semantic concept of this concept list;
- wherein the concept-free list selectively includes those of the data values to which no semantic concept is assigned, wherein each of the data values in the concept-free lists is assigned all object IDs selectively of those data objects which include this data value, wherein no semantic concept is assigned to the included data value of this data object.

16. Use of the redundancy-free data value lists (114, 115, 116) according to claim 15 for searching and/or analyzing the data values contained in these lists.

17. A computer system (100, 500) for storing data comprising:
- at least one processor (108);
- a data storage device (104);
- a data processing and search system - DPS system (102), wherein the DPS system is configured to manage and search the data (114, 115, 116) stored in the data storage device (104) and is configured to cause the at least one processor to perform a method comprising:
• receiving (202) raw data (112) or access addresses for the raw data by a data processing and search system - DPS system (102), wherein the raw data have different structures;
• parsing (204) the raw data by a plurality of different parsers in order to ascertain data objects each having one or more data values, and an object ID of each of the data objects, wherein one semantic concept is assigned to each of at least some of the data values;
• automatically importing (206) the parsing results by the DPS system;
• automatically storing (208) all of the parsing results in the form of redundancy-free data value lists (114, 115, 116) in the data storage device by the DPS system, wherein the redundancy-free lists comprise:
• one or more concept lists (116), wherein each of the concept lists represents a particular semantic concept, and a non-redundant list selectively includes those of the imported data values to which the semantic concept of this concept list was assigned during parsing, wherein each of the data values in the concept list is assigned all of the object IDs of those data objects that include this data value, wherein the included data value is a representation of the semantic concept of this concept list;
• a concept-free list (115), wherein the concept-free list selectively includes those of the imported data values to which no semantic concept was assigned during parsing, wherein each of the data values in the concept-free list is assigned all object IDs of those data objects that include this data value, wherein no semantic concept could be assigned to the included data value of this data object during parsing; and
• providing (210) the redundancy-free lists (114, 115, 116) by the DPS system in order to respond to a search request and/or to perform a data analysis.

18. The computer system according to claim 17, wherein the at least one processor contains an arithmetic logic unit - ALU - which is configured to perform a set operation on sets of object IDs assigned to data values in two or more of the redundancy-free lists, wherein the set operation comprises in particular a calculation of an intersection set, a union set, a difference set, or a symmetric difference set.

## Revendications

1. Procédé d'enregistrement de données (114, 115, 116) dans une mémoire de données (104), le procédé comprenant :
- la réception (202) de données brutes (112) ou d'adresses d'accès aux données brutes par un système de traitement et de recherche de données, DVS, (102), où les données brutes possèdent des structures variables ;
- l'analyse (204) des données brutes par plusieurs analyseurs différents pour la détermination d'objets de données avec chaque fois une ou plusieurs valeurs de données et d'un ID d'objet de chaque objet de donnée, où un concept sémantique est respectivement associé à au moins quelques unes des valeurs de données ;
- l'importation automatique (206) des résultats d'analyse par le système DVS ;
- l'enregistrement automatique (208) de tous les résultats d'analyse sous forme de listes de valeurs de données (114, 115, 116) sans redondance dans la mémoire de données par le système DVS, où les listes sans redondance comprennent :
• une ou plusieurs listes de concepts (116), où chacune des listes de concepts représente respectivement un concept sémantique et une liste non redondante contient sélectivement les valeurs de données importées en question auxquelles le concept sémantique de cette liste de concepts a été associé lors de l'analyse, où, à chacune des valeurs de données dans la liste de concepts sont associés tous les objets de données des ID d'objets en question qui conservent cette valeur de données, où la valeur de données est une représentation du concept sémantique de cette liste de concepts ;
• une liste exempte de concept (115), où la liste exempte de concept contient sélectivement les valeurs de données importées en question, auxquelles aucun concept sémantique n'a été associé lors de l'analyse, où à chacune des valeurs de donnée dans les listes exemptes de concepts sont associés tous les ID d'objets des objets de données en question qui conservent cette valeur de donnée, où à la valeur de donnée de cet objet de donnée conservée lors de l'analyse, aucun concept sémantique n'a pu être associé ; et
- la fourniture (210) des listes sans redondance (114, 115, 116) par le système DVS afin de répondre à une demande de recherche et/ou d'exécuter une analyse de données, où, en particulier, la demande de recherche et/ou l'analyse de données ont lieu sans accès aux données brutes.

2. Procédé selon la revendication 1, dans lequel au moins quelques unes des données brutes se présentent ou sont réceptionnées sous forme d'une multiplicité de structures de données, où la multiplicité de structures de données fait partie en particulier d'un mélange de deux ou plusieurs des structures de données suivantes :
- une donnée XML ;
- une donnée JSON ;
- une donnée de texte ;
- une donnée CSV ;
- un tableau de banque de données ;
- une arborescence d'objets ;
- une données de média, notamment une donnée de vidéo, audio et/ou image ;
- des données qui ont été réceptionnées par une GUI ;
- des données diffusées en continu.

3. Procédé selon l'une des revendications précédentes, où les listes sans redondance comprennent en outre :
- une liste globale (114), où la liste globale est une liste sans redondance de toutes les valeurs de données importées, où un ou plusieurs indicateurs sont associés à chaque valeur de donnée dans la liste globale, où chacun des indicateurs se réfère à un élément d'une des listes de concepts ou à un élément de la liste exempte de concept, lequel contient une valeur de donnée identique à cette valeur de donnée,
- où le système DVS est conçu pour exécuter l'analyse ou la recherche demandée au moins aussi dans la liste globale, où la liste globale sert à la reconnaissance et/ou au traitement spécifique au concept de valeurs de données qui représentent des concepts sémantiques variables dans divers objets de données.

4. Procédé selon l'une des revendications précédentes,
- dans lequel au moins quelques unes des valeurs de données sont extraites de champs de structures de données contenant les données brutes, où les champs sont établis par les structures de données, où les champs comprennent un ou plusieurs champs relatif à un concept et/ou un ou plusieurs champs indépendants de concept, où un champ relatif à un concept est un champ auquel on a associé un indicateur de champ, où l'indicateur de champ représente un concept sémantique ; et/ou où un champ indépendant de concept est un champ qui est exempt d'attribution de sens sémantique,
- et/ou dans lequel au moins quelques unes des valeurs de données sont importées par des analyseurs sémantiques qui reconnaissent les valeurs de données importées ainsi que le concept sémantique leur étant associé sur la base d'une analyse de données, où l'analyse de données est en particulier, une analyse d'images, une analyse de signaux audio, une analyse statistique, un procédé de classification, un procédé d'apprentissage machine, et/ou un procédé de reconnaissance de modèles,
- dans lequel, par exemple, le système DVS enregistre les valeurs de données en question qui ont été extraites des champs relatifs aux concepts dans les listes de concepts en question que le concept sémantique de l'indicateur de champ de ces champs relatifs aux concepts représente ; et/ou
- dans lequel, par exemple, le système DVS enregistre les valeurs de données en question qui ont été extraites de champs indépendants de concept exclusivement dans la liste indépendante de concept (115) lorsque l'analyseur utilisé ne reconnaît aucun concept sémantique de la valeur de donnée.

5. Procédé selon l'une des revendications précédentes, comprenant en outre :
- après que les valeurs de données aient été importées et enregistrées, la fourniture d'un nouvel analyseur qui est conçu pour reconnaitre et importer des valeurs de données qui sont associées à au moins un nouveau concept sémantique, où un nouveau concept sémantique est un concept qui n'est représenté par aucune des listes de concepts contenue actuellement dans la mémoire de données ;
- le traitement des données brutes par le nouvel analyseur, où une ou plusieurs nouvelles valeurs de données sont extraites des valeurs brutes qui sont au moins associées à un nouveau concept ;
- la comparaison de l'au moins un nouveau concept sémantique reconnu par le nouvel analyseur avec les listes de concepts dans la mémoire de données par le système DVS et la création automatique et l'enregistrement d'une nouvelle liste de concepts pour chacun des au moins un nouveau concept sémantique pour lequel le nouvel analyseur a extrait au moins une valeur de donnée ; et
- l'enregistrement automatique des valeurs de données extraites à partir des données brutes par le nouvel analyseur dans au moins une des nouvelles listes de concepts en question qui représente le nouveau concept sémantique, que le nouvel analyseur a associé à cette valeur de donnée.

6. Procédé selon l'une des revendications précédentes, comprenant en outre :
- la réception d'une demande de recherche pour la détermination d'objets de données qui satisfont à un ou plusieurs critères de recherche relatifs aux concepts et/ou à un ou plusieurs critères de recherche indépendants de concept, où un critère de recherche relatif à un concept est un critère de recherche auquel a été associé un identificateur d'un concept sémantique, où un critère de recherche indépendant de concept est un critère de recherche auquel aucun concept sémantique n'est associé ;
- l'interrogation de la liste exempte de concept en ce qui concerne une ou plusieurs valeurs de données qui satisfont à chacun des critères de recherche indépendants de concept réceptionnés, et/ou
- pour chacun des critères de recherche relatifs aux concepts réceptionnés, l'interrogation sélective des listes de concepts en question que le concept sémantique de ce critère de recherche représente, pour une ou plusieurs valeurs de données qui satisfont au critère de recherche relatif au concept ;
- le retour de l'ID d'objet ou d'un sous-ensemble de cet ID d'objet qui sont associés à des valeurs de données qui ont été déterminés lors de l'interrogation de la liste globale et/ou l'au moins une liste de concepts en réponse à la demande de recherche par le système DVS.

7. Procédé selon l'une des revendications précédentes, dans lequel l'utilisation des listes sans redondance (114, 115, 116) comprend, pour l'exécution de la recherche demandée et/ou l'analyse de données :
- l'exécution d'une opération d'ensemble pour des quantités d'ID d'objets, qui sont associés à des valeurs de données dans deux ou plusieurs des listes exemptes de redondance, où l'opération d'ensemble comprend notamment un calcul d'une quantité moyenne, d'une quantité d'association, d'une quantité de différence ou d'une quantité de différence symétrique.

8. Procédé selon l'une des revendications précédentes,
- dans lequel au moins quelques uns des objets de données sont en relation avec d'autres objets de données ;
- dans lequel, dans le cadre de l'analyse des données brutes et/ou dans le cadre d'une opération de traitement de données effectuée plus tard sur les données brutes et/ou les valeurs de données des listes exemptes de redondance déjà enregistrées, le système DVS exécute une extraction des relations d'objets de ces objets de données pour donner d'autres objets de données,
- dans lequel chaque relation extraite d'un des objets de données, nommé ici premier objet de donnée, pour donner un autre des objets de données, nommé ici deuxième objet de donnée, est extraite sous la forme d'une combinaison à base d'un type de relation et l'ID d'objet du deuxième objet de donnée, et
- dans lequel chacune des combinaisons extraites est enregistrée en tant qu'une des valeurs de données dans la liste exempte de concept et/ou dans l'au moins une liste de concepts, où les ID d'objets des premiers objets de données en question, dans lesquels la relation désignée est présente dans la combinaison, sont associés dans la liste exempte de concept et/ou dans au moins une liste de concepts de chaque combinaison extraite.

9. Procédé selon la revendication 8, comprenant :
- la réception d'une demande de recherche ou d'un ordre d'analyse pour la détermination de tous les objets de données, qui ont une relation avec un objet de donnée de recherche, où la demande, ou l'ordre, contient un ID d'objet de recherche ;
- l'interrogation de la liste globale (114) pour déterminer toutes les valeurs de données qui sont constituées d'une combinaison d'un type de relation et d'un ID d'objet qui est identique à l'ID de l'objet de recherche ;
- l'identification d'une ou de plusieurs listes de concepts (116) auxquelles les valeurs de données déterminées dans la liste globale font référence ;
- l'interrogation de la liste ou des listes de concepts identifiées afin de déterminer des valeurs de données qui sont constituées d'une combinaison d'un type de relation et d'un ID d'objet qui est identique à l'ID de l'objet de recherche ;
- le restitution des ID d'objets qui sont associés aux valeurs de données déterminées dans la ou les listes de concepts, donc des ID des objets de données qui ont une relation avec l'objet de recherche.

10. Procédé selon l'une des revendications précédentes, comprenant en outre :
- la mise au point d'un tableau de mise en correspondance par le système DVS, où le tableau de mise en correspondance associe à chaque valeur de donnée dans la liste exempte de concept et à chaque valeur de donnée des listes de concepts chaque fois un ou plusieurs identificateurs, où les identificateurs sont en particulier des valeurs dont la grandeur et/ou le type dépendent de l'architecture du processeur du système informatique employés pour la recherche et/ l'analyse ;
- la création de copies obfusquées de la liste exempte de concept et de chacune des listes de concepts par le système DVS, où les valeurs de données sont respectivement remplacées par un identificateur associé à cette valeur de donnée dans le tableau de mise en correspondance dans les copies obfusquées ;
- l'utilisation des listes obfusquées pour l'exécution de la demande de recherche et/ou de l'analyse par le système DVS.

11. Procédé selon l'une des revendications précédentes, comprenant en outre :
- le chiffrement des listes de concepts et de la liste exempte de concept par le système DVS, ou le chiffrement des listes de concepts obfusquées et de la liste exempte de concept obfusquée par le système DVS ;
- en réponse à la réception de la demande de recherche ou d'un ordre d'analyse de données, l'identification des listes chiffrées en question qui doivent être traitées pour le traitement de la demande de recherche ou de l'ordre d'analyse de données ;
- l'authentification de l'expéditeur de la demande de recherche vis-à-vis du système DVS, où le système DVS vérifie individuellement pour chacune des listes identifiées si l'expéditeur est autorisé à l'accès au contenu de la liste ;
- la création sélective de copies déchiffrées des listes en question identifiées pour lesquelles l'expéditeur s'est authentifié comme étant habilité à l'accès par le système DVS ;
- l'exécution de la demande de recherche ou de l'analyse de données sur les copies de listes déchiffrées ;
- après l'exécution de la demande de recherche ou de l'analyse de données, l'effacement des copies de listes déchiffrées par le système DVS, où, de préférence, le système DVS emploie une clé de chiffrement différente pour le chiffrement de chacune des listes.

12. Procédé selon l'une des revendications précédentes,
- dans lequel au moins une des listes de concepts représente des marqueurs génomiques de plusieurs individus d'une espèce ou sous-espèce, où au moins une autre des listes de concepts représente des caractéristiques métaboliques ou phénotypiques de ces individus, où le système DVS exécute l'analyse de données au moyen d'opérations d'ensemble sur les listes et où l'analyse de données contient une analyse de corrélation de marqueurs génomiques d'une part et de caractéristiques métaboliques ou phénotypiques d'autre part ; ou
- dans lequel au moins quelques unes des valeurs de données de la liste globale et/ou de l'au moins une liste de concepts spécifient une relation « est un composant de » pour d'autres objets, y compris un ID d'objet de cet autre objet, où au moins une nouvelle des listes de concepts représente des caractéristiques métaboliques ou phénotypiques de ces individus, où le système DVS exécute la recherche demandée et où le critère de recherche contient une combinaison du type de relation « est un composant de » et un ID d'objet, où l'ID d'objet du critère de recherche représente une machine ou un véhicule ou un composant multi-composant de cette machine ou du véhicule ; ou
- dans lequel au moins quelques unes des valeurs de données de la liste globale et/ou de l'au moins une liste de concepts sont des mots d'un langage naturel, où le système DVS exécute l'analyse de données au moyen d'opérations d'ensemble sur des listes et où l'analyse de données contient une analyse de corrélation de mots pour l'établissement d'un modèle prédictif de ce langage naturel.

13. Procédé selon l'une des revendications précédentes, dans lequel les valeurs de données sont triées dans les listes sans redondance (114, 115, 116).

14. Support de mémoire volatil ou non volatil sur lequel des instructions lisibles par ordinateur sont enregistrées, où les instructions sont conçues pour faire en sorte qu'un processeur exécute un procédé pour l'enregistrement de données dans une mémoire de données selon l'une des revendications précédentes.

15. Listes de valeurs de données (114, 115, 116) électroniques sans redondance,
- les listes de valeurs de données sans redondance comprenant plusieurs listes de concepts (116) et une liste exempte de concept (115),
- les listes sans redondance contenant des valeurs de données et des ID d'objet d'objets de données qui contiennent respectivement une ou plusieurs de ces valeurs de données ;
- chacune des listes de concepts représentant respectivement un concept sémantique et contenant sélectivement une liste non redondante des valeurs de données en question auxquelles est associé le concept sémantique de cette liste de concepts, où à chacune des valeurs de donnée dans la liste de concept sont associés tous les ID d'objet des objets de données en question qui conservent cette valeur de donnée, où la valeur de donnée conservée est une représentation du concept sémantique de cette liste de concepts ;
- la liste exempte de concept contient sélectivement les valeurs de données en question auxquelles aucun concept sémantique n'est associé, où à chacune des valeurs de données dans les listes exemptes de concept sont associés tous les ID d'objets sélectivement des objets de données en question qui conservent cette valeur de donnée, où aucun concept sémantique n'est associé à la valeur de donnée conservée de cet objet de donnée.

16. Utilisation des listes de valeurs de données (114, 115, 116) sans redondance selon la revendication 15 pour la recherche et/ou l'analyse des valeurs de données contenues dans ces listes.

17. Système informatique (100, 500) permettant l'enregistrement de données comprenant :
- au moins un processeur (108) ;
- une mémoire de données (104) ;
- un système de traitement de données et de recherche, DVS, (102), où le système DVS est conçu pour gérer et consulter les données (114, 115, 116) enregistrées dans la mémoire de données (104) et est conçu pour faire en sorte que l'au moins un processeur exécute un procédé comprenant :
• la réception (202) de données brutes (112) ou d'adresses d'accès aux données brutes par un système de traitement et de recherche de données, DVS, (102), où les données brutes possèdent des structures variables ;
• l'analyse (204) des données brutes par plusieurs analyseurs différents pour la détermination d'objets de données avec une ou plusieurs valeurs de données et d'un ID d'objet de chaque objet de donnée, où un concept sémantique est respectivement associé à au moins quelques unes des valeurs de données ;
• l'importation automatique (206) des résultats d'analyse par le système DVS ;
• l'enregistrement automatique (208) de tous les résultats d'analyse sous forme de listes de valeurs de données (114, 115, 116) sans redondance dans la mémoire de données par le système DVS, où les listes sans redondance comprennent :
• une ou plusieurs listes de concepts (116), où chacune des listes de concepts représente respectivement un concept sémantique et une liste non redondante contient sélectivement les valeurs de données importées en question auxquelles le concept sémantique de cette liste de concepts a été associé lors de l'analyse, où, à chacune des valeurs de données dans la liste de concepts sont associés tous les ID d'objet des objets de données en question qui conservent cette valeur de données, où la valeur de données conservée est une représentation du concept sémantique de cette liste de concepts ;
• une liste exempte de concepts (115),où la liste exempte de concepts conserve sélectivement les valeurs de données importées en question auxquelles aucun concept sémantique n'a été associé lors de l'analyse, où à chacune des valeurs de donnée dans les listes exemptes de concept sont associés tous les ID d'objets des objets de données en question qui conservent cette valeur de donnée, où aucun concept sémantique n'a pu être associé à la valeur de donnée conservée de cet objet de donnée lors de l'analyse ; et
• la fourniture (210) des listes (114, 115, 116) sans redondance par le système DVS afin de répondre à une demande de recherche et/ou d'exécuter une analyse de données.

18. Système informatique selon la revendication 17, dans lequel l'au moins un processeur contient une unité arithmétique logique ALU qui est conçue pour exécuter une opération d'ensemble sur des quantités d'ID d'objets, qui sont associées à des valeurs de données dans deux ou plusieurs des listes sans redondance, où l'opération d'ensemble comprend en particulier un calcul d'une quantité moyenne, d'une quantité d'association, d'une quantité de différence ou d'une quantité de différence symétrique.
